# EUROPÄISCHE PATENTSCHRIFT

(11) **EP 4 320 900 B1**
(45) Veröffentlichungstag und Bekanntmachung des Hinweises auf die Patenterteilung: **12.08.2026**
(21) Anmeldenummer: 22720549.9
(22) Anmeldetag: 05.04.2022
(51) Int. Cl.: G06F 21/57, H04L 9/08, H04W 12/30, H04W 8/18, H04W 8/20, H04L 9/32, H04W 12/40

(54) **VERFAHREN ZUM PERSONALISIEREN EINES SICHEREN ELEMENTES**
PROCEDURE FOR PERSONALISING A SECURE ELEMENT
PROCÉDURE DE PERSONNALISATION D'UN ÉLÉMENT SÉCURISÉ

(30) Priorität: 09.04.2021 DE 102021001850
(43) Veröffentlichungstag der Anmeldung: 14.02.2024
(73) Patentinhaber: Giesecke+Devrient Mobile Security Germany GmbH, 81677 München (DE)
(72) Erfinder: LIM, BeeGek, 85540 Haar (DE); RÖSNER, Martin, 83527 Haag (DE)
(74) Vertreter: Giesecke+Devrient IP
(86) Internationale Anmeldenummer: PCT/EP2022/025131
(87) Internationale Veröffentlichungsnummer: WO 2022/214219

(56) Entgegenhaltungen:
- EP-A1- 2 975 872
- DE-A1- 102014 014 561
- US-A1- 2019 386 822

## Beschreibung

### TECHNISCHES GEBIET DER ERFINDUNG

Die Erfindung bezieht sich auf ein Verfahren zum Personalisieren eines Sicheren Elementes, im folgenden stets Secure Element genannt. Das Secure Element wird in ein mobiles Endgerät fest eingebaut.

Zur Nutzung von Diensten enthält das Endgerät, beispielsweise ein Mobilfunktelefon (wie Smart Phone) oder Laptop/Tablet oder ein Maschine-zu-Maschine-Gerät, englisch: Machine-to-Machine-Device, kurz M2M-Gerät, oder ein Gerät zur Nutzung von Technologien des Internetsder-Dinge, englisch: Internet-of-Things, kurz: IoT, ein Secure Element, nachfolgend auch mit "SE" abgekürzt.

Zur Nutzung eines Endgeräts in einem Kommunikationsnetz eines Netzbetreibers (=MNO) enthält das SE des Endgeräts zumindest einen Subskriptionsdatensatz (kurz: Profil bzw. Profildaten). Das Profil bewerkstelligt die Konfiguration des Endgeräts und die Verbindung des Endgeräts im und mit dem Kommunikationsnetz, beispielsweise einem Mobilfunknetz. Im SE sind dazu Daten (Benutzerdaten, Profildaten, Personalisierungsdaten) als Subskriptionsdatensatz abgelegt, um einen Benutzer (=Person, Teilnehmer bzw. Gerät) für die Nutzung eines Dienstes des Kommunikationsnetzes oder an einem Kommunikationsnetz eindeutig zu identifizieren und/oder zu authentisieren. Dieses Identifizieren/Authentisieren wird auch als SIM-Funktionalität bezeichnet.

Damit ist es einem Betreiber der Dienstleistung oder dem Netzbetreiber des Kommunikationsnetzes möglich, die Nutzung seines angebotenen Dienstes, jedem Benutzer eindeutig zuzuordnen. Weiterhin ist es dem Betreiber eines Kommunikationsnetzes möglich, einen Netzzugang, also das Einbuchen in das Kommunikationsnetz, zu ermöglichen, sobald eine Authentisierung des Benutzers stattgefunden hat. Er kann zudem den Netzzugang verweigern, falls eine Authentisierung des Benutzers nicht möglich ist.

### TECHNISCHER HINTERGRUND

Insbesondere die Vertrauenswürdigkeit, der Schutz sicherheitsrelevanter Benutzerdaten und das Verhindern, dass in absehbarer Zeit nicht auszuhändigende Endgeräte mit ungenutzten Benutzerdaten existieren, machen es einerseits erforderlich, dass ein Endgerätehersteller zunächst ein nicht personalisiertes SE von einem SE-Hersteller erhält und bedingen andererseits, dass der Endgerätehersteller das SE nicht selbst personalisieren darf. Zum Personalisieren des SE, beispielsweise dem Abspeichern eines Betriebssystems auf dem SE und dem Einbringen eines Profils, muss das SE betriebsbereit in das Endgerät eingebaut sein.

Die Produktionskette zum festen Einbau eines SE, wie iSE oder eSE, in ein Endgerät sieht typischerweise vor, dass zunächst ein Chipsatz mit einem iSE hergestellt wird. Der Chipsatz-Hersteller stellt dann den mit dem SE ausgestatteten Chipsatz an einen Endgerätehersteller bereit. Der Endgerätehersteller baut den Chipsatz mit dem SE in das Endgerät ein.

Erst zu einem Zeitpunkt nahe dem Beginn des Lebenszyklus des SE wird das SE personalisiert, wobei in einem ersten Schritt ein Betriebssystem in das SE einprogrammiert wird, um das SE ausführbar zu machen. Nach erfolgreichem Einbringen des Betriebssystems in das SE wird in einem darauffolgenden zweiten Schritt ein Profil in das SE geladen. Das Laden kann beim Endgerätehersteller mittels kontaktbehafteter Schnittstelle erfolgen oder "im Feld" über eine Luftschnittstelle (OTA).

In jedem Fall ist erst nach dem Einbringen eines fest verbauten SE, wie iSE oder eSE, in das Endgerät ein Laden des Betriebssystems und danach ein Einbringen eines Profils vorgesehen bzw. überhaupt möglich. Dies verkompliziert den Fertigungsprozess der Endgeräte beim Endgerätehersteller und verlangsamt die Auslieferung von Endgeräten und ist daher seitens des Endgeräteherstellers und ggf. auch benutzerseitig unerwünscht.

Für Endgerätehersteller wäre wünschenswert, wenn das vom SE-Hersteller gelieferte SE bereits vor einer Personalisierung vollkommen in die Verfügungsgewalt eines Endgeräteherstellers gegeben würde. Dann wäre der Endgerätehersteller nicht auf eine Freigabe des SE-Herstellers angewiesen, um das SE mit Betriebssystem und Profil zu personalisieren, um das Endgerät fertigstellen zu können. Beim Endgerätehersteller wären dann Fertigstellungsprozesse für Endgeräte unabhängig vom SE-Hersteller oder Netzbetreiber.

Würde ein SE-Hersteller vor dem Einbau des SE in das Endgerät das Betriebssystem und Profildaten aber ohne Weiteres an den Endgerätehersteller übergeben oder das SE entsprechend zum Personalisieren durch den Endgerätehersteller freigeben, wären Betriebssystem und Profildaten vollständig außerhalb des Einflussbereichs des SE-Herstellers oder des Netzbetreibers. Der Endgerätehersteller könnte das Betriebssystem und die Profildaten weitgehend beliebig verwenden, auch für Einsatzzwecke, die weder SE-Hersteller noch der Netzbetreiber und ggf. auch die Benutzer selbst nicht billigen würden.

In der deutschen Patentanmeldung DE 102020003275.3 des gleichen Anmelders wird dieses Problem gelöst, indem ein Hardware Security Module, kurz HSM, als sichere Instanz in den Personalisierungsvorgang eingebracht wird. Das SE und das HSM handeln dabei für jedes SE kryptografische Schlüssel aus. Ein verschlüsseltes Betriebssystempaket bestehend aus einem Betriebssystem und Profildaten für ein bestimmtes SE werden zusammen mit einem öffentlichen HSM-Schlüssel als sogenannter "BLOB" im HSM abgelegt und dem Endgerätehersteller auf dessen Einzel-Anfrage sodann einzeln bereitgestellt. Damit ist ein sicherer Austausch von Betriebssystem und Profildaten pro SE während der Fertigstellung der Endgeräte gewährleistet. Der Endgerätehersteller hat keinen Einblick in das Betriebssystem oder die Profildaten des jeweiligen SE, sodass die Verfügungsgewalt für das SE weiterhin nur beim SE-Hersteller bzw. dem HSM ist.

Aus der DE 112016004598 T5 ist ein Vorschlag zum Instantiieren mehrerer eSIMs auf einer eUICC bekannt. Dabei wird einem Hardware-Hersteller für eine eUICC ein eSIM-Paket zur Verfügung gestellt, das wenigstens zwei BLOBs ("Binary Large Object") umfasst, wovon einer einen Datensatz mit gemeinsamen Daten enthält, die für eine Anzahl von eSIMs gleich sind, und der andere einen Datensatz mit eindeutigen Personalisierungsdaten für ein eSIM. Indem mehrere BLOBs mit Datensätzen der zweiten Art eingebracht werden lassen sich auf einer eUICC mehrere eSIMs instantiieren.

Aus der US 2019386822 A1 ist ein Verfahren zum Personalisieren von in SIM-Karten eingebauten ICs bekannt, bei dem ein Datenerzeuger auf einem Server ein Bündel von Speicherabbilden bereitstellt, die ein Betriebssystem und ein Profil eines MNO umfassen. Jeweils ein Speicherabbild wird in einer Produktionsumgebung einem IC bereitgestellt. In einem auf dem IC ausgeführten Personalisierungsschritt werden aus dem erhaltenen Speicherabbild individuelle Daten erzeugt.

Aus der EP 295872 A1 ist ein Verfahren zur Provisionierung von eSIMs bekannt, bei dem ein Speicherabbild auf eine eSIM installiert wird, das entweder ein MNO-Profil enthält oder alternativ ein Test-Profil für Entwicklungs- oder Verifikationszwecke. Die Installation eines Test-Profils erfolgt in einem eigenständigen Installationsprozess.

Aus der DE 102014014561 A1 ist ein Verfahren zum Personalisieren eines Sicherheitselements eines mobilen Endgeräts bekannt, bei dem ein Sicherheitselement einen Personalisierungstoken und einen Identifier des Sicherheitselements an die Personalisierungsinstanz sendet.

Sowohl der Endgerätehersteller als auch der SE-Hersteller haben ein Interesse daran den Personalisierungsvorgang weiter zu optimieren. Dabei soll insbesondere eine Vielzahl von SE "en bloc" für entsprechende Endgeräte (Batch von Endgeräten) bei einem Endgerätehersteller - zu einem Wunschzeitpunkt des Endgeräteherstellers - personalisiert werden können.

Zudem sollen Profildaten für ein SE vor dem Einbringen eines Betriebssystems in das SE zur Verfügung gestellt werden können, um weitere Fertigungsverzögerungen durch den bisherigen zweistufigen Prozess (erst Betriebssystem laden und danach Profildaten erhalten) zu verhindern.

### ZUSAMMENFASSUNG DER ERFINDUNG

Der Erfindung liegt die Aufgabe zugrunde, ein Verfahren zum Personalisieren von SE zu schaffen, bei dem die oben dargestellten Probleme gelöst werden.

Die Aufgabe wird durch das Verfahren nach Anspruch 1 gelöst. Vorteilhafte Ausgestaltungen der Erfindung sind in den abhängigen Ansprüchen angegeben.

Erfindungsgemäß wird ein Verfahren zum Personalisieren eines Secure Elements mit den folgenden Verfahrensschritten vorgesehen: Empfangen, in einem Datenerzeuger, einer Anfrage für ein Bündel von Speicherabbildern für eine Vielzahl von Secure Elementen, wobei jedes angefragte Speicherabbild des empfangenen Bündels ein Secure Element der Vielzahl von Secure Elementen betrifft und wobei jeweils ein Secure Element der Vielzahl von Secure Elementen in einem entsprechenden Endgerät einer Vielzahl von Endgeräten fest verbaut wird oder ist; Erhalten, im Datenerzeuger, von zumindest einem Subskriptionsdatensatz für zumindest ein zu personalisierendes Secure Element der Vielzahl von Secure Elementen, wobei der Subskriptionsdatensatz von einem Subskriptionsverwaltungsserver erhalten wird; Bereitstellen, durch den Datenerzeuger, eines Betriebssystems oder eines Teils des Betriebssystems für das zu personalisierende Secure Element; Erzeugen, durch den Datenerzeuger, eines Speicherabbilds für jedes der Secure Elemente gemäß der empfangenen Anfrage, wobei das Speicherabbild des zu personalisierenden Secure Elements das bereitgestellte Betriebssystem oder den Teil des Betriebssystems und zusätzlich den erhaltenen zumindest einen Subskriptionsdatensatz umfasst; und Bündeln der erzeugten Speicherabbilder und Bereitstellen der gebündelten Speicherabbilder als Speicherabbilder-Bündel vom Datenerzeuger zur Fertigstellung der Endgeräte unter Einbringen zumindest des Speicherabbilds des zu personalisierenden Secure Elements in das Secure Element zum Personalisieren des Secure Elements.

Erfindungsgemäß umfasst das Speicherabbild des zu personalisierenden Secure Elements, bevorzugt von zwei oder mehr SE, bevorzugter aller SE, zusätzlich ein Testprofil. Das Testprofil ist kein Erstprofil.

Unter dem Begriff Personalisieren ist dabei das Einbringen eines Betriebssystems oder zumindest eines Betriebssystemteils und auch das Einbringen eines Subskriptionsdatensatzes in ein SE vorgesehen. Ein personalisiertes SE ist dazu eingerichtet, den Benutzer eines Endgeräts, in dem das SE fest eingebaut ist, an einem Kommunikationsnetz zu identifizieren/authentisieren, um Dienste des Kommunikationsnetzes nutzen zu können. Das Personalisieren umfasst die Schritte Einrichten des SE, also das Ablegen und Installieren eines Betriebssystems in das SE und auch ein Initialisieren des SE mit Benutzerdaten (Profildaten, ggf. auch Subskriptionsdatensatz genannt).

Das Personalisieren umfasst auch das Vorpersonalisieren bzw. das Einbringen eines Erstprofils, mit dem eine Erstanmeldung (initiale Authentifizierung) des SE nach Erststart des Endgeräts bei einem Netzbetreiber nicht als ungültig abgewiesen wird und ggf. eine Weiterleitung zu einem Subskriptionsverwalter erfolgt.

Ein Datenerzeuger ist eine von einem Endgerätehersteller und auch von einem Subskriptionsdatenverwalter verschiedene Instanz in dem Personalisierungsvorgang. Der Datenerzeuger ist in einer Ausgestaltung räumlich getrennt (also extern) vom Endgerätehersteller und/oder dem Subskriptionsdatenverwalter angeordnet. Der Datenerzeuger kann ein SE-Hersteller sein, also eine Instanz, die eine SE-Funktionalität, insbesondere eine SIM-Funktionalität zum Einbringen in ein SE bereitstellt. Zudem ist der Datenerzeuger eine Instanz, die - ungeachtet von einem Betriebssystem des SE - Profildaten von einem Subskriptionsdatenverwalterserver erhalten kann. Der Datenerzeuger kann auch als SIM-Hersteller oder vSIM-Hersteller bezeichnet werden und ist vorrangig für die Erzeugung von Speicherabbildern für SE vorgesehen. Ein Speicherabbilder für ein SE umfasst ein Betriebssystem für das SE und einen Subskriptionsdatensatz (Profildaten). Mit Einrichten des Speicherabbilds im SE beim Endgerätehersteller, erhält das SE eine SIM-Funktionalität.

Der Datenerzeuger erhält eine Anfrage für ein Bündel von Speicherabbildern für eine Vielzahl von SE. Das Bündel entspricht dabei einer Anzeige einer Zusammenführung von Einzel-Anfragen betreffend eine Vielzahl von SE. Das Bündel ist ein Datensatz, mit dem für eine Vielzahl von SE ein jeweiliges Speicherabbild (gebündelt) angefragt wird. In einem einfachen Fall enthält die empfangene Anfrage (nur) die Angabe einer Anzahl von Speicherabbildern, die vom Datenerzeuger bereitgestellt werden soll.

In einem komplexeren Fall enthält die empfangene Anfrage entsprechende Einzel-Anfragen. So kann die Anfrage auch Angaben über einen Bereich von eindeutigen SE-Kennungen (wie SE-Identifikatoren) enthalten. Beispielsweise kann die Anfrage eine SE-Kennung als Startkennung und zudem eine Angabe über die Anzahl von angefragten Speicherabbildern sein. Beispielsweise kann die Anfrage eine erste SE-Kennung als Startkennung und eine zweite SE-Kennung als Stoppkennung umfassen. Es wird in diesen Fällen davon ausgegangen, dass alle angefragten Speicherabbilder für eine Vielzahl von SE vorgesehen sind, deren SE-Kennungen einen aufeinanderfolgenden Kennnummernkreis haben.

In einem anderen komplexeren Fall enthält die empfangene Anfrage entsprechende Einzel-Anfragen. Die Einzel-Anforderungen in der Anfrage werden zu einem Bündel verkettet (Konkatenation), aneinander angefügt (bspw. als Tag-Length-Value, TLV, -Datensatz) oder anderweitig verknüpft sein. Im Datenerzeuger werden so alle Einzel-Anfragen auf einmal am Stück (en bloc) erhalten.

Bevorzugt wird die Anfrage für das Bündel von einem Endgerätehersteller oder einem Chipsatzhersteller versendet und direkt im Datenerzeuger empfangen. Der Endgerätehersteller oder der Chipsatzhersteller erstellen diese Anfrage für das Bündel ggf. im Rahmen eines Fertigungsprozesses für eine Vielzahl von Endgeräten, in die jeweils zumindest ein SE fest eingebaut werden soll.

Der Begriff "SE" wird in dieser Beschreibung synonym zu den Begriffen "Universal Integrated Circuit Card (=UICC)" "embedded UICC (=eUICC)", "integrated UICC (=iUICC)", "integrated Secure Element (=iSE)", "embedded Secure Element (=eSE)", "Chipkarte", "Smart Card", "Teilnehmeridentitätsmodul", "subscriber identity module (=SIM)", "embedded SIM (=eSIM)", "integrated SIM (=iSIM)" oder "virtuelle SIM (=vSIM)" verwendet.

Bei einem SE im Sinne der Erfindung handelt es sich um ein in Baugröße und Ressourcenumfang reduziertes elektronisches Modul, welches eine Steuereinheit (Mikrocontroller) und mindestens eine Schnittstelle (Datenschnittstelle) zur Kommunikation mit dem Gerät aufweist. Diese Kommunikation erfolgt bevorzugt über ein Verbindungsprotokoll, insbesondere einem Protokoll gemäß dem Standard ETSI TS 102 221 bzw. ISO-7816. Bei in System on Chip, kurz SoC, integrierten UICC Bauformen, wie beispielsweise der "iUICC", "iSE" oder dem "iTRE", erfolgt die Kommunikation über einen SoC internen Bus. Das SE weist einen internen oder externen sicheren nicht-flüchtigen Speicherbereich auf, in dem Benutzerdaten sicher eingebracht sind, um Manipulation- und/oder Missbrauchsversuche bei der Identifizierung und/oder Authentisierung am Netzwerk zu verhindern. Das SE weist einen Speicherbereich auf, in dem interne Zustände einer SE-Sitzung abgelegt werden können.

Das SE dient dazu, mit den im sicheren nicht-flüchtigen Speicherbereich gespeicherten maschinenlesbaren Benutzerdaten einen Benutzer in einem Kommunikationsnetz zu identifizieren und für das Nutzen von Diensten zu authentifizieren (=SIM-Funktionalität).

Somit sind unter diesen SE auch USIM, TSIM, ISIM, CSIM oder R-UIM. So ist beispielsweise ein SE als eine USIM Anwendung in der ETSI TS 131 102 definiert. So ist beispielsweise ein SE als eine SIM-Anwendung in der ETSI TS 151 011 definiert. So ist beispielsweise ein SE als eine TSIM-Anwendung gemäß ETSI TS 100 812 definiert. So ist beispielsweise ein SE als eine ISIM-Anwendung gemäß ETSI TS 131 103 definiert. So ist beispielsweise ein SE als eine CSIM-Anwendung gemäß 3GPP2 C.S0065-B definiert. So ist beispielsweise ein SE als eine R-UIM-Anwendung gemäß 3GPP2 C.S0023-D definiert.

Die erfindungsgemäßen SE können in unterschiedlichen Formfaktoren gestaltet sein, insbesondere embedded, integrated oder als reine Software-SE.

Das SE ist fest in ein Endgerät verbaut.

Beispielsweise ist das SE ein eingebauter (integraler, embedded) Bestandteil innerhalb des Endgeräts, beispielsweise ein fest verdrahteter elektronischer Baustein (=Chip, Schaltkreis). Derartige embedded SE, wie eSE oder eUICC, können nicht einfach aus dem Endgerät entnommen werden und sind prinzipiell nicht einfach austauschbar. Derartige eSE sind eine sichere Hardwarekomponente im Endgerät. Das eSE ist auf einem dezidierten, eigenen gehäusten Chip oder SoC angeordnet und fest in ein Endgerät eingebaut (z.B. eingelötet), aber ansonsten ähnlich zu den früher geläufigen Plug-In SE aufgebaut. Standardmäßig hat ein embedded SE einen eigenen internen nichtflüchtigen NVM-Speicher, in welchem Betriebssystem, Personalisierungsdaten, Subskriptions-Profile und Applikationen gespeichert sind.

Das SE kann auch eine Softwarekomponente in einem vertrauenswürdigen Teil eines Betriebssystems, einer sogenannten Trusted Execution Environment, kurz TEE, des Gerätes sein. Das SE ist beispielsweise innerhalb einer gesicherten Laufzeitumgebung in Form von darin ablaufenden Programmen, sogenannten "Trustlets", ausgebildet.

Beispielsweise ist das SE ein voll-integriertes Modul in einem Endgeräte-Chip oder einem SoC des Chipsatzes des Endgeräts. Im Unterschied zu embedded SE sind diese SE nicht auf einem eigenen Chip, abgetrennten Chip vorgesehen. Diese SE werden als "iUICC", "iTRE" oder "iSE" bezeichnet. Dazu umfasst das Endgerät selbst einen Chipsatz, der einen oder mehrere Endgerät-Chips zum Betrieb von Funktionen des Endgeräts umfasst. Smartphones haben beispielsweise typischerweise einen Chipsatz mit zumindest drei Endgeräte-Chips, nämlich einen Transceiver-IC, der die physische Funkkommunikation durchführt, einen Basisbandprozessor (oder gleichbedeutend Modem), der Funktionen zur Datenübertragung über Funkkommunikation auf Protokollebene durchführt, und einen Applikationsprozessor AP, auf welchem das Betriebssystem und Anwendungssoftware ausgeführt werden. Als weitere Endgeräte-Chips können Transceiver-ICs für andere Funkkanäle vorgesehen sein, insbesondere für kurzreichweitige Funkkanäle wie NFC- (NFC: near field communication) oder Bluetooth-Module. Die Kommunikation innerhalb des Chipsatzes, zwischen den Chips des Chipsatzes, erfolgt beispielsweise über einen Bus.

Ein iSE hat innerhalb eines dem iSE zugewiesenen Bereich auf dem Chipsatz einen internen sicheren Prozessor und einen internen Arbeitsspeicher, allerdings kaum internen nichtflüchtigen NVM-Speicher, der zur gesicherten dauerhaften Speicherung von Betriebssystem mit Subskriptionsdatensatz und/oder Profildaten verwendet werden könnte. Daher wird für iSE der Ansatz verfolgt, das Betriebssystem und den Subskriptionsdatensatz in einem außerhalb des iSE, aber noch im (gleichen) Chipsatz des Endgeräts, vorgesehenen externen nichtflüchtigen NVM-Speicher in verschlüsselter Form abzuspeichern. Nur das iSE kann das im externen nichtflüchtigen NVM-Speicher des Chipsatzes verschlüsselt abgespeicherte Betriebssystem und den Subskriptionsdatensatz entschlüsseln und exklusiv innerhalb des iSE, beispielsweise durch einen sicheren Prozessor (Secure Processor), im internen Arbeitsspeicher des iSE zur Ausführung bringen. Das Endgerät hingegen kann das Betriebssystem und die Profildaten bzw. denSubskriptionsdatensatz) nicht entschlüsseln und nicht zur Ausführung bringen.

Diese Nutzung externer nichtflüchtiger NVM-Speicher des Endgeräts für Betriebssystem und Subskriptionsdatensatzt ist gleichermaßen auch für eSE vorsehbar.

Anstelle der Verwendung eines NVM-Speichers im (gleichen) Chipsatz des Endgeräts, kann der Endgerätehersteller auch einen (anderen) NVM-Speicher in das Endgerät einbauen. Der NVM-Speicher kann exklusiv für das/die SE des Endgeräts bestimmt sein.

Der Chipsatz einschließlich eines darin befindlichen SE kann als ein einziges System-on-Chip vorgesehen sein, das als ein monolithisches Bauelement in ein Endgerät eingelötet werden kann.

In einer Ausgestaltung stellt ein SE-Hersteller eine SE-Hardware-Einheit her und stellt diese Einheit an einen Chipsatz-Hersteller bereit. Der Chipsatz-Hersteller integriert diese SE-Hardware-Einheit in einen Chipsatz für ein Endgerät, z.B. durch Auflöten der SE-Hardware-Einheit auf eine Platine, auf die auch weitere Elemente des Chipsatzes aufgelötet werden. Schließlich wird der Chipsatz in das Endgerät fest eingebaut, z.B. eingelötet.

Keines der Vielzahl von SE ist zum Zeitpunkt des Empfangens der Anfrage für das Bündel personalisiert. Keines der Vielzahl von SE kann vom Endgerätehersteller personalisiert oder eingerichtet werden. In einer Ausgestaltung ist das SE zum Zeitpunkt des Empfangens der Anfrage für das Bündel (noch) nicht fest in das jeweilige Endgerät verbaut.

Der Begriff "Endgerät" wird hier bevorzugt verwendet, da das Endgerät in der Kommunikationstechnik vorrangig ein "Terminal" sein kann. Das schließt nicht aus, dass das "Endgerät" ein "Gerät" in einer anderen Technik sein kann. Die Begriffe "Endgerät" und "Gerät" werden hierbei synonym verwendet.

Das SE kann der Fernüberwachung, -kontrolle und -wartung von Geräten wie Maschinen, Anlagen und Systemen dienen. Es kann für Zähleinheiten wie Stromzähler, Warmwasserzähler etc. verwendet werden. Das SE ist beispielsweise Bestandteil der Technologie des IoT.

Jedes Endgerät kann zumindest ein SE aufweisen, es können auch mehrere SE in einem Endgerät fest eingebaut (embedded SE, integrated SE, SE als Software) sein.

Bei einem Endgerät im Sinn der Erfindung handelt es sich prinzipiell um ein Endgerät oder eine Endgerätekomponente mit Mitteln zur Kommunikation mit einem Kommunikationsnetz, um Dienste des Kommunikationsnetzes nutzen zu können oder um Dienste eines Servers über ein Gateway des Kommunikationsnetzes nutzen zu können. Beispielsweise ist ein mobiles Endgerät wie ein Smartphone, ein Tablet-PC, ein Notebook etc. unter dem Begriff zu fassen. Unter dem Endgerät können beispielsweise auch Multimediaendgeräte wie digitale Bilderrahmen, Audiogeräte, Fernsehgeräte, E-Book-Reader, eine Smart Watch, eine Datenbrille verstanden werden, die Mittel zur Kommunikation mit dem Kommunikationsnetz aufweisen.

Beispielsweise ist das Endgerät in einer Maschine, einem Automaten und/oder einem Fahrzeug eingebracht. Ist das Endgerät in einem Kraftfahrzeug eingebracht, hat es beispielsweise ein iSE oder eSE oder ein SE als Software. Das SE kann mittels des Endgeräts, beispielsweise eines Modems des Endgeräts (bevorzugt auf dem gleichen Chipsatz wie das SE), eine Datenverbindung zu einem Server über das Kommunikationsnetz aufbauen. Mit dem Endgerät kann beispielsweise ein Server des Endgeräteherstellers kontaktiert werden, um Steuereinheiten, z.B. ECUs (ECU = Electronic Control Unit) für Funktionalitäten des Endgeräts anzusprechen. Über das SE lässt sich ein Server im Hintergrundsystem des Mobilfunknetz-Betreibers, MNO, kontaktieren, beispielsweise ein Server, um Aktualisierungen für Software, Firmware oder/und Betriebssystem des SE in das SE zu laden.

Ein Subskriptionsdatensatz wird auch als Teilnehmeridentitätsdatensatz, Profil, Profildaten, Profildatensatz, Benutzerdaten bezeichnet. Der Subskriptionsdatensatz besteht aus einer gemeinsamen Datenstruktur, z.B. einer File- und/oder Objektstruktur, und Personalisierungsdaten. Die gemeinsame Datenstruktur ist dabei für ein Bündel von SE gleich. Sie legt insbesondere die Struktur der Datei bzw. der Dateien fest, in die die Personalisierungsdaten abgelegt werden. Die Personalisierungsdaten enthalten Daten, die einen Benutzer (=eine Person, ein Teilnehmer oder ein Gerät) eindeutig im Kommunikationsnetz identifizieren. Dazu zählt beispielsweise eine Teilnehmerkennung, auch International Mobile Subscriber Identity, kurz IMSI und/oder teilnehmerspezifische Daten. Zudem enthalten Personalisierungsdaten Daten, die einen Teilnehmer eindeutig am Kommunikationsnetz authentisieren, beispielsweise einen Authentisierungsalgorithmus, spezifische Algorithmus-Parameter, einen kryptografischen Authentisierungsschlüssel Ki und/oder einen kryptografischen Over-The-Air, kurz OTA, Schlüssel. Zudem enthalten Personalisierungsdaten beispielsweise Daten, die einen Teilnehmer eindeutig an einem Dienst (=Service) authentisieren, beispielsweise eine eindeutige Kennung oder Signatur. Ein Dienst ist insbesondere ein Sprachdienst oder ein Datendienst eines Servers, mit dem Informationen und/oder Daten über das Kommunikationsnetzwerk übertragen werden. Der Subskriptionsdatensatz wird beispielsweise im nicht-flüchtigen Speicherbereich des SE abgelegt.

Zu einem Subskriptionsdatensatz werden - der Einfachheit halber - auch etwaige Personalisierungsdaten des SE und Applikationen des SE hinzugezählt. Zudem kann ein Subskriptionsdatensatz beispielsweise auch personenbezogene Daten enthalten. Zudem kann ein Subskriptionsdatensatz beispielsweise auch ein Geheimnis, wie PIN oder PUK enthalten, mit denen sich ein Benutzer am SE authentisiert.

Ein SE kann nur einen Subskriptionsdatensatz (Profil) oder auch eine Mehrzahl von Subskriptionsdatensätzen (Profile) aufweisen und damit personalisiert werden.

Ein Subskriptionsdatensatz (Profil) ist beispielsweise nur ein Erstprofil (auch initiales Profil), mit dem ein SE eine Kommunikationsverbindung zu einem beliebigen Kommunikationsnetz aufbaut (und nicht vom Netz abgewiesen wird). Das Kommunikationsnetz erkennt das Erstprofil und leitet die Datenkommunikation des SE an einen Subskriptionsverwalter weiter. Der Subskriptionsverwalter lädt sodann ein vollständiges Profil für den Benutzer via Luftschnittstelle (OTA) auf das SE.

Im Datenerzeuger wird zumindest ein Subskriptionsdatensatz (=Profil) von einem Subskriptionsdatenverwalterserver erhalten. Dieser Server stellt demnach bereits Profile bereit, ohne dass das SE mit einem Betriebssystem ausgestattet ist. Dieser Ansatz entspricht dem Ansatz aus der deutschen Patentanmeldung DE 102020003275.3 vom gleichen Anmelder. Der Server ist bevorzugt eine von dem Endgerätehersteller und dem Datenerzeuger räumlich entfernt angeordnete (externe) Instanz. Der Server kann ein Teil des Kommunikationsnetzes sein. Alternativ oder zusätzlich ist der Server keine Instanz des Kommunikationsnetzes. Der Server ist bevorzugt ein Server eingerichtet zur Fernverwaltung der SE, beispielsweise ein sogenannter Provisionierungsserver, um Profile oder Aktualisierungen für Software, Firmware oder/und Betriebssystem des SE auf das SE zu laden. Der Server ist bevorzugt ein SM-DP oder SM-DP+ gemäß dem GSMA Standard SGP.02.

Der Datenerzeuger stellt zudem ein Betriebssystem oder zumindest einen Betriebssystemteil bereit. Das Betriebssystem ist beispielsweise ein natives Betriebssystem. Es ist zudem denkbar, dass das Betriebssystem eingerichtet ist, eine Javacard Laufzeitumgebung, JCRE, zu betreiben, die sodann zusammen mit dem Betriebssystem im SE abzulegen ist. Als Teil des Betriebssystems ist denkbar, dass sicherheitsunkritische Teile des Betriebssystems bereits auf dem SE vorinstalliert sind, die aber nicht ausreichen, um das SE betriebsbereit zu machen. Der Teil des Betriebssystems, der im Datenerzeuger bereitgestellt wird, ist dann eingerichtet, das SE betriebsbereit zu machen.

Das bereitgestellte Betriebssystem betrifft vorrangig statische Daten, die im Lebenszyklus des SE unverändert bleiben. Der erhaltene Subskriptionsdatensatz betrifft vorrangig dynamische Daten, die im Lebenszyklus des SE verändert/aktualisiert/entfernt/überschrieben werden können.

Der Datenerzeuger erzeugt ein Speicherabbild für jedes der Vielzahl von SE gemäß der empfangenen Anfrage. Dabei umfasst zumindest das Speicherabbild des zu personalisierenden SE das bereitgestellte Betriebssystem (oder den Teil des Betriebssystems) und den erhaltenen Subskriptionsdatensatz. Das Speicherabbild (auch Speicherimage) ist die inhaltliche Kopie des Inhalts für das SE. Das Speicherabbild wird als eine Datei gespeichert. Ein derartiges Speicherabbild wird auch als Binary Large Object, kurz BLOB, bezeichnet.

Bevorzugt wird jedes der erzeugten Speicherabbilder kryptografisch (SE-individuell) verschlüsselt.

Bevorzugt wird jedes der Speicherabbilder zusammen mit einer Prüfsumme, beispielsweise einem Message Authentication Code, MAC, in einer Datenbank abgelegt.

Die erzeugten Speicherabbilder werden bevorzugt als BLOBs in einer Datenbank des Datenerzeugers abgelegt.

Das Verfahren umfasst auch den Bündeln-Schritt, in dem alle erzeugten Speicherabbilder gemäß der empfangenen Anfrage gebündelt, verkettet, konkateniert, verknüpft werden.

Schließlich wird das Speicherabbilder-Bündel zur Fertigstellung der Endgeräte unter Einbringen zumindest des Speicherabbilds des zu personalisierenden Secure Elements in das Secure Element zum Personalisieren des Secure Elements vom Datenerzeuger bereitgestellt.

In einer bevorzugten Ausgestaltung umfasst die Anfrage für das Bündel von Speicherabbildern für jedes angefragte Speicherabbild eine Endgeräte-Information betreffend ein Endgerät, in das ein Secure Element betreffend das angefragte Speicherabbild fest verbaut wird oder ist. Als Endgeräte-Information ist beispielsweise eine Kennung, etwa ein Identifikator des Endgeräts, vorgesehen. Das kann beispielsweise eine Chip-ID, eine Chipsatz-ID oder eine Device-ID oder dergleichen sein. Damit können Eigenschaften des jeweiligen Endgeräts anhand der Endgeräte-Information vom Datenerzeuger erkannt werden und ggf. eine Auswahl des Betriebssystems oder des Profils endgeräteindividuell getroffen werden. Alternativ dient diese Endgeräte-Information nur dem Protokollieren im Endgerätehersteller oder dem Datenerzeuger.

In einer bevorzugten Ausgestaltung umfasst die Anfrage für das Bündel von Speicherabbildern für jedes angefragte Speicherabbild eine Secure-Element-Information betreffend eines der Vielzahl von Secure Elementen betreffend eines der angefragten Speicherabbilder. Als Secure-Information ist beispielsweise eine Kennung, wie Identifikator des Chipsatzes für ein SE vorgesehen. Das kann beispielsweise eine Chip-ID oder Chipsatz-ID oder dergleichen sein. Damit können Eigenschaften des jeweiligen Chipsatzes anhand der Secure-Element-Information vom Datenerzeuger erkannt werden und ggf. eine Auswahl des Betriebssystems oder des Profils chipsatzabhängig getroffen werden.

Bevorzugt ist die Endgeräte-Information und/oder die Secure-Element-Information eine Chipsatz-Information für einen Chipsatz, der das Secure Element umfasst, bevorzugt einen Identifikator des Chipsatzes, insbesondere eine SE-UID.

In einer bevorzugten Ausgestaltung umfasst die Anfrage für das Bündel von Speicherabbildern für jedes angefragte Speicherabbild eine Benutzerinformation betreffend einen Benutzer eines Endgeräts, in das ein SE betreffend eines der angefragten Speicherabbilder fest verbaut wird. Als Benutzer-Information ist beispielsweise eine Kennung, wie Identifikator des Benutzers vorgesehen. Das kann beispielsweise eine Benutzer-ID oder dergleichen sein. Damit können Benutzervorlieben (Spracheinstellungen, Datentarife, Sprachtarife, etc.) ggf. anhand der Benutzer-Information vom Datenerzeuger erkannt werden und ggf. eine Auswahl des Betriebssystems oder des Profils benutzerabhängig getroffen werden.

In einer bevorzugten Ausgestaltung umfasst die Anfrage für das Bündel von Speicherabbildern für jedes angefragte Speicherabbild einen öffentlichen Schlüsselteil eines kryptografischen Schlüsselpaares des SE betreffend eines der angefragten Speicherabbilder.

Bevorzugt basiert also der erhaltene Subskriptionsdatensatz auf der Endgeräte-Information, der Secure-Element-Information und/oder der Benutzerinformation, um das Speicherabbild endgeräteabhängig, chipsatzabhängig und/oder benutzerabhängig auszugestalten.

Bevorzugt wird der Subskriptionsdatensatz erst auf explizite Anfrage des Datenerzeugers beim Subskriptionsdatenverwaltungsserver erhalten. Damit werden die Daten erst generiert, wenn diese tatsächlich abgefragt werden, die Sicherheit von personenbezogenen Daten ist damit erhöht.

Bevorzugt erhält der Datenerzeuger im Erhalten-Schritt zumindest einen Subskriptionsdatensatz für zumindest zwei oder mehr, bevorzugt für alle Secure Elemente der Vielzahl von Secure Elementen vom Subskriptionsverwaltungsserver. Das Verfahren sieht also vor, dass ggf. sogar mehr als nur eine Datensatzanforderung des Bündels im Datenerzeuger vollständig verarbeitet wird indem für zwei oder mehr oder gar alle SE der Vielzahl von SE Subskriptionsdatensätze erhalten werden. Es ist denkbar, dass pro SE mehr als ein Subskriptionsdatensatz erhalten wird und sodann mehr als ein Subskriptionsdatensatz Teil des entsprechenden Speicherabbilds des jeweiligen SE wird.

Bevorzugt wird im Bereitstellen-Schritt für zumindest zwei oder mehr, bevorzugt für alle Secure Elemente der Vielzahl von Secure Elementen ein Betriebssystem oder ein Teil des Betriebssystems bereitgestellt. Das Verfahren sieht also vor, dass ggf. sogar mehr als nur eine Datensatzanforderung des Bündels im Datenerzeuger vollständig verarbeitet wird indem für zwei oder mehr oder gar alle SE der Vielzahl von SE Betriebssystem oder Teile davon bereitgestellt werden und sodann Teil des Speicherabbilds werden.

Bevorzugt wird das Speicherabbilder-Bündel in einer Datenbank - bevorzugt des Datenerzeugers selbst - bereitgestellt und von einem Endgerätehersteller zum Fertigstellen der Vielzahl von Endgeräten abgerufen, wobei das Abrufen aus der Datenbank kryptografisch abgesichert erfolgen kann.

Erfindungsgemäß wird nicht für jedes SE ein Speicherabbild einzeln abgefragt und vom Datenerzeuger einzeln bereitgestellt, sondern es wird ein Bündel angefragt und es wird ein Speicherabbilder-Bündel bereitgestellt. Dieses kann sodann im Endgerätehersteller oder Chipsatz-Hersteller direkt in großen Volumen (en bloc) weiterverarbeitet werden.

Das Testprofil enthält keine Benutzerdaten und dient dazu, die Funktionalität des SE, beispielsweise das Identifizieren/Authentisieren zu simulieren und zu testen. Damit kann sichergestellt werden, dass das SE und das eingebrachte Betriebssystem ordnungsgemäß funktionieren, bevor eine Authentisierung/Identifizierung des SE mit den echten Profildaten des SE durchgeführt wird. Etwaige Verbindungsfehler können dann nicht auf ein fehlerhaftes Betriebssystem oder eine fehlerhafte Architektur des SE zurückgeführt werden, die Fehleranalyse ist damit vereinfacht und beschleunigt.

Bevorzugt wird das Testprofil nach dem Personalisieren des Secure Elements im sodann fertiggestellten Endgerät ausgeführt, um eine Kommunikationsverbindung mit einem Mobilfunknetzwerk zu simulieren. Die Simulation dient der Prüfung, ob ein Einwählen in das Netzwerk mit dem SE möglich wäre.

Bevorzugt wird erst bei erfolgreich simulierter Kommunikationsverbindung eine SIM-Funktionalität des SE freigeschaltet. Dabei wird das Testprofil des SE deaktiviert und ein (echtes) Profil aktiviert.

Bevorzugt umfasst der Datenerzeuger einen vSIM-Hersteller (auch als eUICC Manufacturer, kurz "EUM" bezeichnet) oder einen SE-Hersteller.

Bevorzugt ist das Secure Element ein iSE oder ein eSE, das jeweils fest eingebaut im Endgerät ist und nicht einfach ausgetauscht werden kann.

Bevorzugt wird vor dem Erhalten der Anfrage für ein Bündel von Speicherabbildern für jedes Secure Element ein asymmetrisches kryptografisches Schlüsselpaar erzeugt, wobei der private Schlüsselteil des asymmetrischen kryptografischen Schlüsselpaars permanent im SE verbleibt und der öffentliche Schlüsselteil des asymmetrischen kryptografischen Schlüsselpaars in ein Hardware Security Modul, HSM, des Datenerzeugers übermittelt wird.

Bevorzugt entnimmt der Endgerätehersteller nach Erhalt des Speicherabbilder-Bündels, das Speicherabbild für das zu personalisierende Secure Element aus dem Speicherabbilder-Bündel und legt es in das zu personalisierende Secure Element ab.

Das Personalisieren für eine Vielzahl von SE kann in Reaktion auf einen Auftrag zur Personalisierung gestartet werden. Beispielsweise wird dazu jeweils ein Identifikator (Identifier) des zu personalisierenden SE erhalten, z.B. ein Unique Identifier UID. Ein solcher Auftrag wird beispielsweise von einem Endgerätehersteller gesendet und dabei physisch in ein zur Personalisierung verwendetes Personalisierungssystem, insbesondere ein Hardware Security Module, HSM, eines solchen Personalisierungssystems bereitgestellt, das der Endgerät-Hersteller zur Personalisierung des Secure Element verwendet.

Erfindungsgemäß wird ein Batch umfassend eine Vielzahl von SE im Batch-Betrieb beim Datenerzeuger personalisiert. Die Anfrage für ein solches Batch (Bündel) enthält sodann mehrere Identifier mehrerer zu personalisierender SE, z.B. UIDs.

Die Erfindung schafft zusammenfassend ein Verfahren zum Personalisieren einer Vielzahl von SE, wobei ein SE in ein entsprechendes Endgerät einer Vielzahl von Endgeräten fest eingebaut wird.

Bevorzugt umfasst das Personalisieren die Vereinbarung eines geteilten Geheimnisses zwischen jedem SE und dem Datenerzeuger (beispielsweise dessen Hardware Security Module, HSM), eine Verschlüsselung des Betriebssystems mit Profildaten (=Subskriptionsdatensatz) im HSM basierend auf dem geteilten Geheimnis zum Erzeugen von personalisierten Speicherabbildern und Übertragen einer Vielzahl der erzeugten Speicherabbilder als Bündel an den anfragenden Endgerätehersteller.

Weiter bevorzugt wird das Betriebssystem im SE neuverschlüsselt (umverschlüsselt) und dann in einem NVM-Speicher des Endgeräts/des Chipsatzes, der außerhalb des Secure Element liegt, abgespeichert.

Das Kommunikationsnetz ist bevorzugt ein Mobilfunknetzwerk.

Gegenstand der Erfindung ist demnach das effiziente Personalisieren einer Vielzahl von SE mit einer SIM-Funktionalität. Die SE sind dabei fest in Endgeräte verbaut. Die Erfindung schafft eine Umgebung, bei der ein Endgerätehersteller kein SE-Management betreiben muss und auch weiterhin nicht darf, aber dennoch ein zügiges Fertigstellen von Endgeräten garantiert ist. Dazuerzeugt der Endgerätehersteller oder der Chipsatz-Hersteller eine Anfrage für ein Bündel an Speicherabbildern, ggf. mit Abgaben Angaben zu den jeweiligen Chips, zu den jeweiligen Kunden und ggf. zu den gewünschten Netzbetreibern ((v)MNOs). Der Datenerzeuger erstellt entsprechende Speicherabbilder beschafft dazu unmittelbar Profildaten und Betriebssystem. Für jeden Datensatz wird so ein BLOB erzeugt. Die BLOBs werden in einer Datenbank blockweise vorgehalten. Der Endgerätehersteller erhält das angefragte Bündel von Speicherabbildern en bloc.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt ein Ausführungsbeispiel eines Ablaufdiagrams eines erfindungsgemäßen Verfahrens zum Personalisieren von SE;
Fig. 2 zeigt ein Ausführungsbeispiel eines Sequenzdiagrams des erfindungsgemäßen Verfahrens gemäß Fig. 1;
Fig. 3 zeigt in schematischer Darstellung vier beispielhafte Ausgestaltungen eines Chipsatzes und eines Secure Element in einem Endgerät, geeignet für das Verfahren gemäß der Erfindung;
Fig. 4 zeigt in schematischer Darstellung eine beispielhafte Ausgestaltung eines Chipsatzes und eines eSE in einem Endgerät, geeignet für das Verfahren gemäß der Erfindung;
Fig. 5 zeigt in schematischer Darstellung eine beispielhafte Ausgestaltung eines Chipsatzes und zweier iSE in einem Endgerät, geeignet für das Verfahren gemäß der Erfindung;
Fig. 6 zeigt eine Weiterbildung des Sequenzdiagrams des erfindungsgemäßen Verfahrens gemäß Fig. 2;
Fig. 7 zeigt ein Speicherabbild, gemäß einer Ausführungsform der Erfindung;
Fig. 8 zeigt in schematischer Darstellung eine beispielhafte Ausgestaltung eines SE mit JCRE gemäß der Erfindung;
Fig. 9 zeigt in schematischer Darstellung eine beispielhafte Ausgestaltung eines Aufbaus einer Verbindung zwischen SE und einem Kommunikationsnetz gemäß der Erfindung; und
Fig. 10 zeigt in schematischer Darstellung ein Aufbau von Profildaten für ein SE gemäß der Erfindung.

### DETAILLIERTE BESCHREIBUNG VON AUSFÜHRUNGSBEISPIELEN

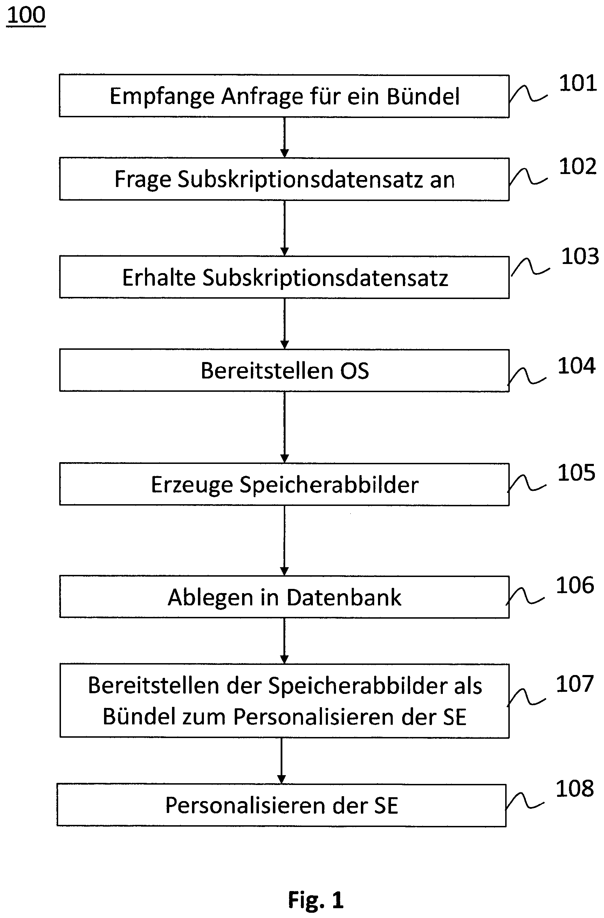

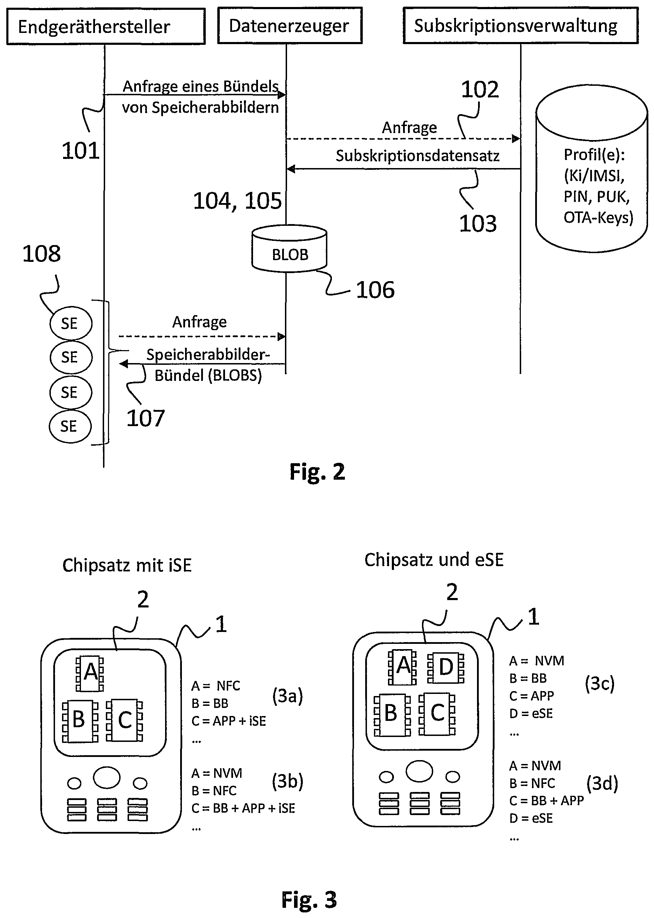

Fig. 1 zeigt ein Ausführungsbeispiel eines Ablaufdiagrams eines erfindungsgemäßen Verfahrens zum Personalisieren eines SE. Fig. 2 zeigt ein Ausführungsbeispiel eines Sequenzdiagrams des erfindungsgemäßen Verfahrens gemäß Fig. 1. Die Figuren 1 und 2 werden nachfolgend zusammen beschrieben.

Im Schritt 101 wird eine Anfrage für ein Bündel von Speicherabbildern in einem Datenerzeuger von einem Endgerätehersteller empfangen. Diese Anfrage betrifft ein SE einer Vielzahl von SE. Jeweils ein SE der Vielzahl von SE ist in einem entsprechenden Endgerät einer Vielzahl von Endgeräten fest verbaut oder wird dort verbaut. Die Anfrage könnte auch Datensatzanforderungs-Bündel genannt werden.

Im Folgeschritt 102 wird ein Subskriptionsdatensatz bei einem Subskriptionsverwaltungsserver, hier einem SM-DP+, angefragt.

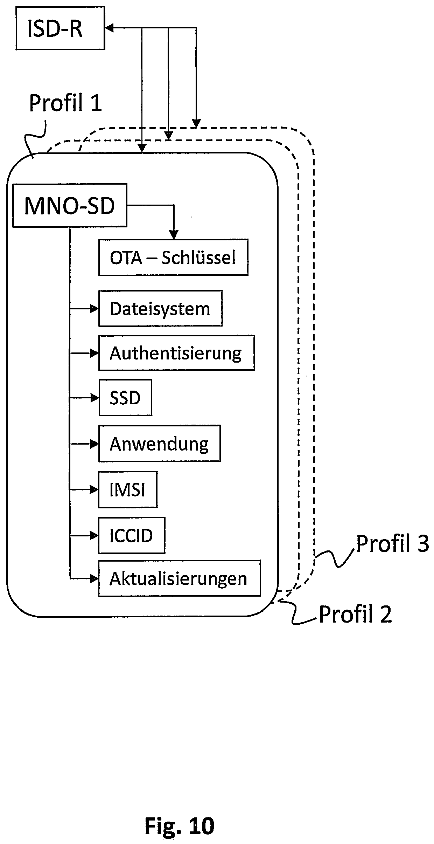

Im Schritt 103 wird im Datenerzeuger zumindest ein Subskriptionsdatensatz für zumindest ein zu personalisierendes Secure Element der Vielzahl von Secure Elementen erhalten. Der Subskriptionsdatensatz wird von dem SM-DP+ erhalten. Der Subskriptionsdatensatz ist dazu eingerichtet, einen Benutzer an einem Kommunikationsnetz zu authentisieren und/oder zu identifizieren (=SIM-Funktionalität). Der Subskriptionsdatensatz umfasst beispielsweise eine IMSI, einen Authentisierungsschlüssel Ki, eine PIN/PUK Kombination und OTA-Schlüssel. Die Struktur eines Subskriptionsdatensatzes (=Profil) ist in Fig. 10 dargestellt.

Im Schritt 104 wird durch den Datenerzeuger ein Betriebssystem oder ein Teil des Betriebssystems für das zu personalisierende Secure Element bereitgestellt.

Im Schritt 105 erzeugt der Datenerzeuger ein Speicherabbild 10 für jedes der Secure Elemente gemäß der Anfrage aus Schritt 101. Die Speicherabbilder 10, auch BLOBs genannt, beinhalten für ein zu personalisierendes Secure Element ein Betriebssystem oder einen Teil des Betriebssystems sowie zusätzlich einen erhaltenen Subskriptionsdatensatz. Weiterhin kann das Speicherabbild 10 ein Testprofil 7 umfassen.

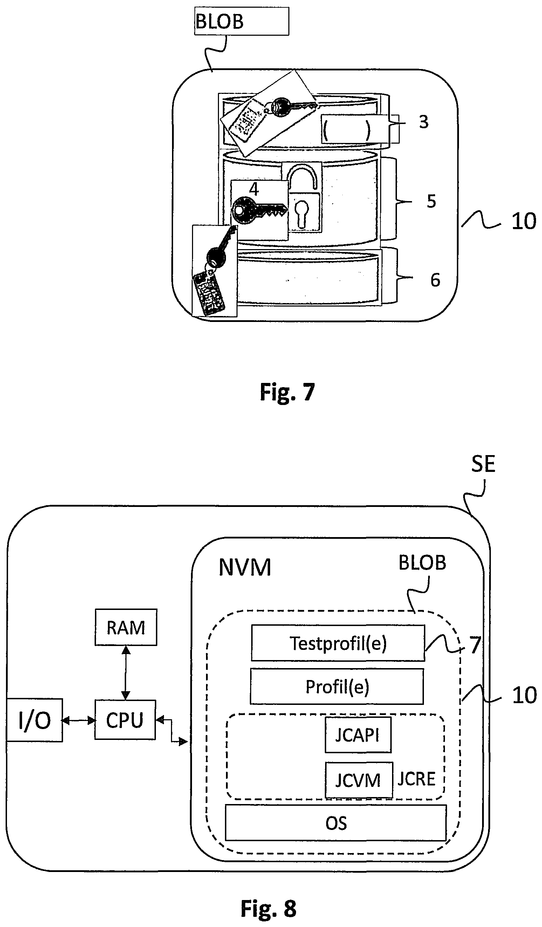

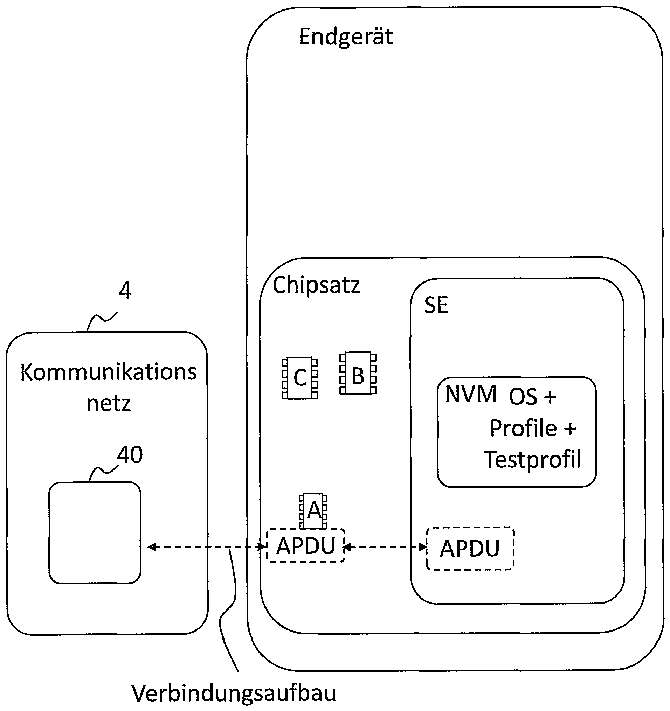

Im Folgeschritt 106 werden die erzeugten Speicherabbilder 10 in einer Datenbank des Datenerzeugers abgelegt. Die Struktur eines BLOBs 10 ist beispielsweise in der Fig. 7 gezeigt.

Im Schritt 107 werden die erzeugten Speicherabbilder 10 gebündelt und die gebündelten Speicherabbilder werden als Speicherabbilder-Bündel vom Datenerzeuger bereitgestellt.

Im Schritt 108 wird unter Einbringen zumindest des Speicherabbilds 10 des zu personalisierenden Secure Elements das SE personalisiert.

Enthält das Speicherabbild 10 ein Testprofil 7, wird dieses nach dem Personalisieren des Secure Elements in Schritt 108 im dann fertiggestellten Endgerät 1 ausgeführt, um eine Kommunikationsverbindung mit einem Mobilfunknetzwerk zu simulieren. Erst nach erfolgreicher Ausführung des Testprofils 7 wird die die SIM-Funktionalität des Secure Elements wirksam freigeschaltet. Dabei wird das Testprofil 7 des SE deaktiviert und ein (echtes) Profil aktiviert. Anschließend wird das Endgerät 1 einem Benutzer übergeben. Dieser kann das Endgerät 1 unmittelbar nutzen und mittels des aktivierten Profils eine Kommunikationsverbindung mit einem Mobilfunknetzwerk herstellen.

Fig. 3 zeigt in schematischer Darstellung vier beispielhafte Ausgestaltungen eines Chipsatzes 2 und eines SE in einem Endgerät 1, geeignet für das Verfahren gemäß der Erfindung.

Gemäß Fig. 3(a) umfasst der Chipsatz 2 einen NFC-Chip A (NFC = Near Field Communication, Nahfeldkommunikation), einen Basisbandprozessor-Chip B und einen Chip C, auf dem ein Applikationsprozessor APP und ein integriertes Secure Element iSE integriert sind. Weitere Chips können in dem Chipsatz 2 der Fig. 3(a) vorgesehen sein.

Gemäß Fig. 3(b) umfasst der Chipsatz 2 einen NVM-Chip A, auf dem ein nichtflüchtiger NVM-Speicher NVM integriert ist, der einem integrated Secure Element iSE (vgl. nachfolgend) zugeordnet ist, einen NFC-Chip B, und einen Chip C, auf dem ein Basisbandprozessor BB, ein Applikationsprozessor APP und ein integriertes Secure Element iSE integriert sind. Weitere Chips können in dem Chipsatz 2 der Fig. 3(b) vorgesehen sein.

Gemäß Fig. 3(c) umfasst der Chipsatz 2 einen NVM-Chip A, auf dem ein nichtflüchtiger NVM-Speicher NVM integriert ist, der einem embedded Secure Element eSE (vgl. nachfolgend) zugeordnet ist, einen Basisband-Prozessor-Chip B und einen Applikationsprozessor-Chip C. Zusätzlich zum Chipsatz 2 des Endgeräts 1 ist im Endgerät 1 ein embedded Secure Element eSE auf einem Chip D vorgesehen. Weitere Chips können in dem Chipsatz 2 der Fig. 3(c) vorgesehen sein.

Gemäß Fig. 3(d) umfasst der Chipsatz einen NVM-Chip A, auf dem ein nichtflüchtiger NVM-Speicher NVM integriert ist, der einem embedded Secure Element eSE (vgl. nachfolgend) zugeordnet ist, einen NFC-Chip B, und einen Chip C, auf dem ein Basisband-Prozessor BB und ein Applikationsprozessor APP vorgesehen sind. Zusätzlich zum Chipsatz 2 des Endgerät 1 ist im Endgerät 1 ein embedded Secure Element eSE auf einem Chip D vorgesehen. Weitere Chips können in dem Chipsatz 2 der Fig. 3(d) vorgesehen sein.

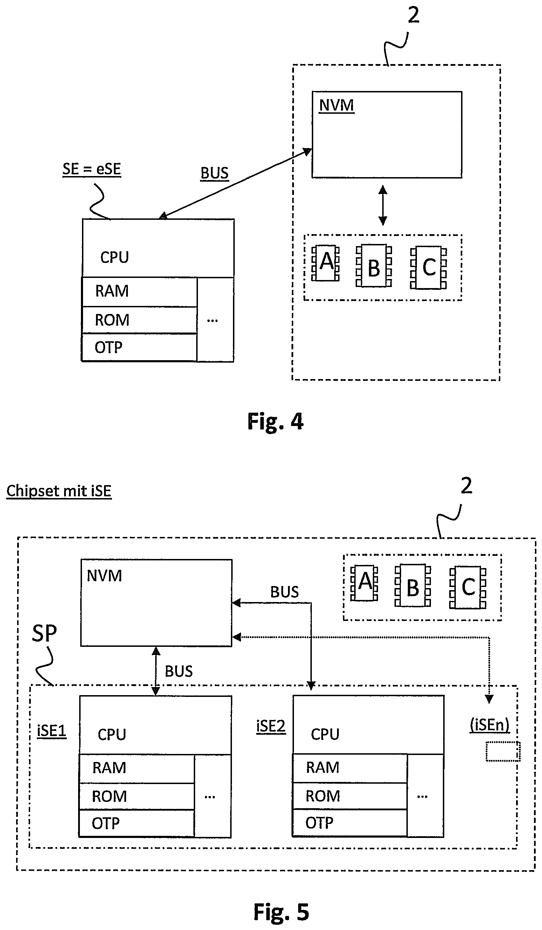

Fig. 4 zeigt in schematischer Darstellung eine beispielhafte Ausgestaltung eines Chipsatzes 2 und eines eSE in einem Endgerät 1, geeignet für das Verfahren gemäß der Erfindung. Das embedded Secure Element eSE umfasst einen Secure Processor mit einer Steuereinheit CPU, einen internen Arbeitsspeicher (flüchtiger Speicher) RAM, einen internen permanenten ROM-Speicher ROM und einen einmalbeschreibbaren permanenten OTP-Speicher OTP.

Die Speicherkapazität des internen permanenten ROM-Speicher ROM und des einmalbeschreibbaren permanenten OTP-Speicher OTP des embedded Secure Element eSE ist nur sehr gering. Im Chipsatz 2 des Endgeräts 1 ist deshalb ein dem embedded Secure Element eSE zugeordneter, für dieses eSE nutzbarer nichtflüchtiger NVM-Speicher NVM vorgesehen. Weitere Elemente des Chipsatzes 2 des Endgeräts 1 wie Applikationsprozessor A, Basisbandprozessor (Modem) B und NFC-Modul C sind in Fig. 4 nur angedeutet.

Fig. 5 zeigt in schematischer Darstellung eine beispielhafte Ausgestaltung eines Chipsatzes 2 und zweier iSE in einem Endgerät 1, geeignet für das Verfahren gemäß der Erfindung. Der innere Aufbau jedes integrated Secure Elements iSE1, iSE2 mit CPU, RAM, ROM, OTP ist im Wesentlichen derselbe wie der des in Fig. 4 gezeigten embedded Secure Elements eSE.

Im Unterschied zu embedded Secure Elementen eSE sind integrated Secure Elemente iSE1, iSE2 direkt in einen Chipsatz 12 des Endgeräts 1 integriert. Im Chipsatz 2 des Endgeräts 1 der Fig. 5 ist ein den integrated Secure Elementen iSE1, iSE2 zugeordneter, für diese nutzbarer nichtflüchtiger NVM-Speicher NVM vorgesehen, der für jedes der beiden integrated Secure Elemente iSE1, iSE2 einen eigenen Speicherbereich aufweist, der nur für das jeweilige iSE zugreifbar ist. Alternativ (nicht dargestellt) kann für jedes der integrated Secure Elemente iSE1, iSE2 ein eigener zugeordneter, für dieses nutzbarer nichtflüchtiger NVM-Speicher NVM vorgesehen sein. Weitere Elemente des Chipsatzes 2 des Endgeräts 1 wie Applikationsprozessor A, Basisbandprozessor (Modem) B und NFC-Modul C sind in Fig. 5 nur angedeutet.

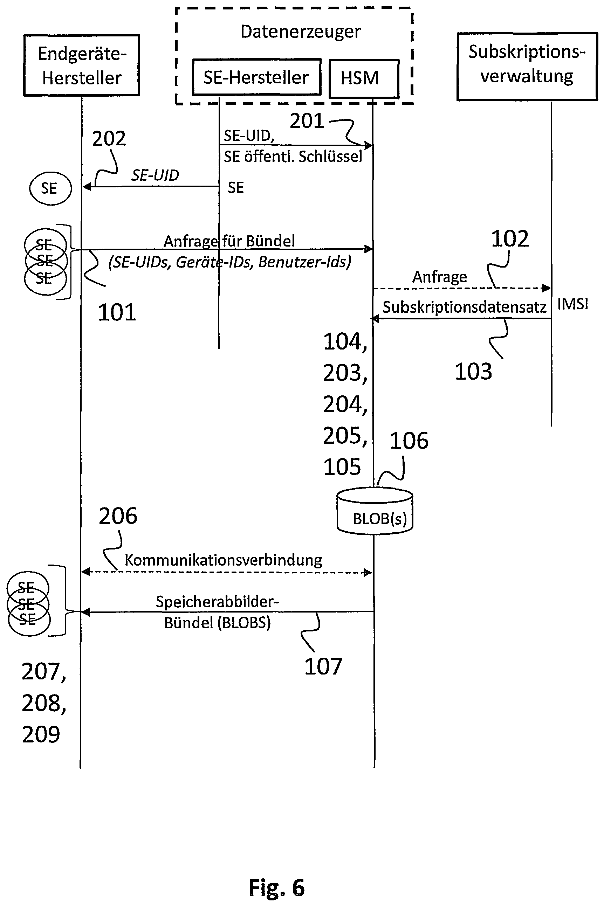

Fig. 6 zeigt eine Weiterbildung des Sequenzdiagrams des erfindungsgemäßen Verfahrens gemäß Fig. 2. Auf die Ausführungen zu den Figuren 1 und 2 (oben) wird hier zur Vermeidung von Wiederholungen Bezug genommen und nur die zusätzlichen Elemente werden nachfolgend beschrieben.

Die Weiterbildung des Verfahrens umfasst nun noch die folgenden Schritte:
Der Schritt 201: Bereitstellen eines SE durch einen SE-Hersteller als Teil des Datenerzeugers. Zudem kann ein dem SE zugeordnetes asymmetrisches SE-Schlüsselpaar erzeugt werden, das einen privaten SE-Schlüssel und einen öffentlichen SE-Schlüssel umfasst. Der private SE-Schlüssels verlässt das SE nicht. Zudem kann ein Identifikator SE-UID des SE, beispielsweise des ETSI Unique Identifier UID, als SE-Information an ein Hardware Security Module HSM des Datenerzeugers übermittelt werden.

Zudem kann der öffentliche SE-Schlüssel an das Hardware Security Module HSM des Datenerzeugers übermittelt werden. Das Übermitteln des öffentlichen SE-Schlüssels kann über mehrere Stationen erfolgen. Beispielsweise wird der öffentlichen SE-Schlüssel zunächst aus dem Secure Element SE an einen Server des SE-Herstellers (als Teil des Datenerzeugers) übermittelt und anschließend von diesem Server des SE-Herstellers in das HSM (als Teil des Datenerzeugers) übermittelt. Diese Form der Schlüsselverteilung entspricht einem Konzept der SE-internen Schlüsselableitung, auch on-board (im SE) Schlüsselableitung oder on-board Schlüsselgenerierung genannt.

Bei einem alternativen Konzept der Schlüsselverteilung, auch Schlüsselinjektion genannt, wird das dem SE zugeordnete asymmetrischen SE-Schlüsselpaar im HSM erzeugt oder/und abgeleitet. Der öffentliche SE-Schlüssel wird später durch das HSM selbst oder durch ein anderes HSM verwendet, und der private SE-Schlüssel wird vom Hardware Security Module HSM an das SE übermittelt, oder anders ausgedrückt vom HSM aus in das SE injiziert. Anschließend verlässt der private SE-Schlüssel das SE nicht mehr.

Das HSM kann danach beispielsweise einem Hersteller von Betriebssystemen bereitgestellt werden. Dies kann wahlweise durch physisches Bereitstellen des HSM an den Hersteller von Betriebssystemen erfolgen. Alternativ und bevorzugt werden die Betriebssysteme vom Datenerzeuger selbst bereitgestellt. Dazu verbleibt das HSM physisch beim SE-Hersteller und die Betriebssystem-Bereitstellungs-Instanz des Datenerzeugers (nicht explizit in Fig. 6 dargestellt) erhält via Datenverbindung Zugriff auf das HSM.

Weniger bevorzugt ist es auch möglich, dass Schlüssel über einen gesicherten Mechanismus von einem HSM zu einem anderen HSM übermittelt werden, so dass im Personalisierungsvorgang mehrere HSM zum Einsatz kommen.

Der Schritt 201 wird für die Vielzahl von SE wiederholt.

Der Schritt 202: Bereitstellen des SE an den Endgerätehersteller und Festeinbau des SE in ein Endgerät 1. In das Endgerät 1 werden oder wurden zu irgendeinem Zeitpunkt die übrigen Komponenten des herkömmlichen Chipsatzes 2 des Endgeräts 1 sowie ein für das SE bestimmter nichtflüchtiger NVM-Speicher NVM eingebaut (siehe Figuren 3 bis 5). Das SE kann wahlweise als eigenes Bauelement an den Endgerätehersteller bereitgestellt werden. Alternativ wird das SE zunächst an einen Chipsatz-Hersteller (nicht explizit dargestellt) bereitgestellt und von diesem in den Chipsatz 2 eingebaut. Der Chipsatz-Hersteller stellt sodann den Chipsatz 2 mit dem SE an den Endgerätehersteller bereit. Gemäß einer Alternative ist das SE auf einem Einzelchip oder SoC fertigungstechnisch vollintegriert als Teilstruktur auf der Chipfläche des Chipsatzes. In diesem Fall stellt der Chipsatz-Hersteller den Chipsatz inklusive des SE an den Endgerät-Hersteller bereit. Die Teilstruktur des SE kann dabei in Auftrag des SE-Herstellers gefertigt sein. Alternativ ist der Chipsatz-Hersteller zugleich der SE-Hersteller.

Der Schritt 202 wird für die Vielzahl von SE wiederholt.

Die Vielzahl von Endgeräte 1 beim Endgerät-Hersteller sind nun bereit für eine Personalisierung der darin befindlichen SE durch Einspielen eines Betriebssystems und eines Subskriptionsdatensatzes bzw. Profildaten in jede Kombination aus Endgerät 1 und SE für die Vielzahl von Endgeräten 1.

Der Endgerät-Hersteller hat Zugriff auf das HSM des Datenerzeugers, in welchem der öffentliche SE-Schlüssel des zu personalisierenden SE enthalten ist. Das kann hierzu HSM räumlich beim Endgerät-Hersteller bereitgestellt werden oder der Endgerätehersteller ist mit einer Datenfernverbindung an das HSM angebunden (nicht explizit in Fig. 6 gezeigt).

Der Schritt 101 entspricht dem Schritt 101 aus Figuren 1 und 2. Folgendes wird ergänzt. Um die Personalisierung der SE zu veranlassen, kann die Betriebssystem-Bereitstellungs-Instanz des Datenerzeugers für die SE die Anfrage aus Schritt 101 an das HSM weiterleiten. In der Anfrage sind dann bevorzugt Identifikatoren der zu personalisierenden SE, beispielsweise die Unique Identifier UID der SE, enthalten, sowie bei Bedarf eine Angabe (=Endgeräte-Informationen) der jeweiligen Vielzahl von Endgeräten des Endgeräteherstellers. Diese Anfrage für ein Bündel an SE anstatt eines einzelnen Auftrags für jedes einzelne SE ist aus den oben genannten Gründen vorteilhaft.

Schritte 102 bis 105 entsprechen den Schritten 102 bis 105 der Figuren 1 und 2. Ggf. wird hier nochmal gesondert darauf Bezug genommen.

Schritt 203: In dem HSM erfolgt ein Erzeugen oder Bereitstellen eines asymmetrischen HSM-Schlüsselpaars, das einen öffentlichen HSM-Schlüssel und einen privaten HSM-Schlüssel umfasst. Dieser Schritt 203 kann auch schon im HSM erfolgt sein, bevor im HSM die Anfrage gemäß Schritt 101 zur Personalisierung empfangen worden ist.

Der Schritt 203 wird für jedes der Vielzahl von SE wiederholt.

Erst in Reaktion auf den Empfang der Anfrage gemäß Schritt 101 erfolgt hingegen Schritt 204. Im HSM erfolgt ausgehend von dem privaten HSM-Schlüssel und dem öffentlichen SE-Schlüssel ein Ableiten eines mit einem der Vielzahl von SE geteilten Geheimnisses, welches als zumindest ein symmetrischer Schlüssel gestaltet ist. Wahlweise umfasst das geteilte Geheimnis einen symmetrischen Schlüssel, vorzugsweise jedoch zwei symmetrische Schlüssel. Der eine bzw. der erste Schlüssel ist ein Transportschlüssel (der Transportschlüssel ist ein Verschlüsselungsschlüssel), oder aus dem einen/ ersten Schlüssel wird ein solcher Transportschlüssel abgeleitet. Der zweite Schlüssel ist ein Authentisierungsschlüssel, oder aus dem zweiten Schlüssel wird ein Authentisierungsschlüssel abgeleitet.

Der Schritt 204 wird für jedes der Vielzahl von SE wiederholt.

Schritt 205: Im HSM wird ein Betriebssystem-Paket für eines der SE bereitgestellt. Das Betriebssystem-Paket umfasst das gemäß dem Schritt 104 bereitgestellte Betriebssystem OS für das jeweilige SE und die Profildaten (=Subskriptionsdatensatz) für das jeweilige SE gemäß der Schritte 102 und 103. Wahlweise können in dem Betriebssystem-Paket zusätzlich bereits ein oder mehrere Applikationen für das jeweilige SE vorgesehen sein, die später im jeweiligen SE ausführbar sein sollen. Wahlweise wird zusätzlich eine Prüfsumme, beispielsweise ein Message Authentication Code MAC, zum Betriebssystem-Paket hinzugefügt.

Das Betriebssystems-Paket wird mit dem zuvor abgeleiteten Transportschlüssel verschlüsselt, um ein verschlüsseltes Betriebssystem-Paket zu erzeugen.

Der Schritt 205 wird für jedes der Vielzahl von SE wiederholt.

Nach dem Verschlüsseln des Betriebssystem-Pakets erfolgt Schritt 105 gemäß Figuren 1 und 2: Im HSM wird pro SE ein Speicherabbild BLOB erzeugt, das zur Programmierung eines jeweiligen SE geeignet ist. Das Speicherabbild BLOB umfasst zumindest das verschlüsselte Betriebssystem-Paket und den öffentlichen HSM-Schlüssel sowie falls vorhanden die Prüfsumme, z.B. der Message Authentication Code MAC.

Der Schritt 105 wird für jedes der Vielzahl von SE wiederholt, um das Speicherabbilder-Bündel zu erhalten.

Schritt 206: Erstellen und Betreiben einer Datenverbindung zwischen HSM und dem Endgerätehersteller unter Übermitteln des Speicherabbilder-Bündels von dem HSM an den Endgerätehersteller. Alternativ oder zusätzlich kann die Datenverbindung die Speicherabbilder BLOB "live" an das in dem jeweiligen Endgerät 1 der Vielzahl von Endgeräte 1 fest eingebaute SE übertragen, sodass jedes der Speicherabbilder BLOB aus dem Speicherabbilder-Bündel direkt im jeweilige SE empfangen wird.

Nachdem das entsprechende Speicherimage BLOB im jeweiligen SE empfangen worden ist wird in Schritt 207 im SE der öffentliche HSM-Schlüssel aus dem Speicherimage BLOB ausgehend von dem privaten SE-Schlüssel und dem öffentlichen HSM-Schlüssel extrahiert. Sodann erfolgt ein Ableiten des geteilten Geheimnisses und des Transportschlüssels und ein Entschlüsseln des verschlüsselten Betriebssystem-Pakets mittels des Transportschlüssels.

Der Schritt 207 wird für jedes der Vielzahl von SE wiederholt.

Schritt 208: Im SE erfolgt ein Bereitstellen, Erzeugen oder Ableiten eines für das SE individuellen symmetrischen NVM-Verschlüsselungsschlüssels, der von dem Transportschlüssel unterschiedlich ist. Sodann erfolgt ein (Neu-)Verschlüsseln des entschlüsselte Betriebssystem-Pakets mit dem NVM-Verschlüsselungsschlüssel.

Der Schritt 208 wird für jedes der Vielzahl von SE wiederholt.

Nach dem Verschlüsseln jedes entschlüsselten Betriebssystem-Pakets mit dem NVM-Verschlüsselungsschlüssel erfolgt Schritt 209: Im SE erfolgt ein Abspeichern des entschlüsselten und mit dem individuellen symmetrischem NVM-Verschlüsselungsschlüssel wieder verschlüsselten Betriebssystem-Pakets in einen dem SE zugeordneten NVM-Speicher NVM des jeweiligen Endgeräts 1 (extern vom SE oder internes NVM des SE). Dabei wird durch das Abspeichern des Betriebssystem-Pakets im NVM-Speicher NVM das SE mit einem im SE ausführbaren Betriebssystem ausgestattet, das bereits mit dem Subskriptionsdatensatz (=Profildaten) personalisiert ist, und dem ggf. bereits die ebenfalls im Betriebssystem-Paket bereitgestellten ein oder mehreren Applikationen zur Verfügung stehen.

Fig. 7 zeigt ein Speicherabbild respektive einen BLOB 10. Der BLOB 10 umfasst ein Betriebssystem OSund ein Profil (Subskriptionsdatensatz) mit den Personalisierungsdaten. Anhand von Fig. 7 werden die Erzeugung, Struktur und Verwendung eines Speicherabbildes BLOB 10 unter Mitwirkung der Betriebssystem-Bereitstellungs-Instanz des Datenerzeugers erläutert.

Abschnitt 3 des BLOBs: Die Betriebssystem-Bereitstellungs-Instanz des Datenerzeugers erzeugt im HSM einen BLOB-individuellen öffentlichen ECC-Schlüssel, der als Grundlage für ein ECIES (Elliptic Curve Integrated Encryption Scheme) Verfahren verwendet wird.

Abschnitt 4 des BLOBs zeigt einen chip-individuellen BLOB-Verschlüsselungs-Schlüssel(nach AES128 Algorithmus): Dieser Schlüssel 4 wird zur Ver-/Entschlüsselung der BLOB-Daten verwendet. Der Schlüssel 4 wird nicht im BLOB 10 übertragen. Dieser Schlüssel ist die Ausgabe des ECIES. Bei einer Berechnung im SE gilt: Die Eingabe ist der SE-individuelle private ECC-Schlüssel (privater SE-Schlüssel) und der BLOB-individuelle öffentliche ECC-Schlüssel. Die Ausgabe ist das geteilte Geheimnis. KDF ("shared secret") = BLOB-Verschlüsselungsschlüssel. Mit ECIES wird auch ein MAC-Schlüssel generiert.

Abschnitt 5 des BLOBs 10 zeigt die eigentlichen BLOB-Daten, die aus dem Programmcode des Betriebssystems (oder Teils des Betriebssystems) und dem Programmcode der Profildaten bestehen. Dieser Abschnitt 5 wird mit dem chipindividuellen BLOB-Verschlüsselungsschlüssel verschlüsselt übertragen. Dieses verschlüsselte Segment sollte zusätzlich MAC-aktiviert werden.

Abschnitt 6 des BLOBs zeigt eine Signatur über den BLOB: Die Signatur wird mit einem Betriebssystem-Bereitstell-Instanz-Signaturschlüssel des Datenerzeugers über die BLOB-Daten aus Abschnitt 5 des BLOB erzeugt. Die Signatur selbst wird jedoch durch den chipindividuellen BLOB-Verschlüsselungsschlüssel verschlüsselt.

Der Betriebssystem-Bereitstell-Instanz-Signatur-Verifizierungsschlüssel wird in eine angepasste Version des Bootloaders integriert und die Signatur wird während des Ladens des BLOBs in das iSE bzw. das dazugehörige NVM verifiziert.

Fig. 8 zeigt ein Blockschaltbild eines SE. Das SE hat ein Betriebssystem OS. Das Betriebssystem OS ist beispielsweise ein natives Betriebssystem. Das Betriebssystem OS kann dazu eingerichtet sein, eine Java Card Laufzeitumgebung, JCRE, mit entsprechender Programmierschnittstelle(n) JCAPI zu betreiben. Zudem sind Profildaten und ein Testprofil 7 gezeigt. OS, JCRE, JCAPI, Profile und Testprofil 7 stellen, wie durch die Einfassung angedeutet, ein Speicherabbild bzw. einen BLOB 10 dar, das gemäß zum Personalisieren eines SE in den NVM des SE (bzw. des dem SE zugeordneten NVM) eingebracht ist.

Das SE ist im betriebsbereiten d.h. im personalisierten Zustand dazu ausgestaltet mit dem Gerät 2 gemäß Fig. 9 Daten auszutauschen. Zur Datenübertragung bzw. Kommunikation zwischen dem SE und dem Endgerät 1 weisen sowohl das SE als auch das Endgerät 1 jeweils geeignete Kommunikationsschnittstellen auf.

Das SE hat zudem die oben bereits dargestellte CPU. Zu den primären Aufgaben der CPU gehören das Ausführen von arithmetischen und logischen Funktionen und das Lesen und Schreiben von Datenelementen, wie dies durch von der CPU ausgeführten Programmcode definiert wird. Die CPU steht ferner mit einem flüchtigen Arbeitsspeicher, RAM, einem Permanentspeicher ROM und einem nichtflüchtigen wieder beschreibbaren Speicher NVM in Verbindung. Vorzugsweise handelt es sich bei dem nichtflüchtigen Speicher NVM um einen Flash-Speicher (Flash-EEPROM). Dabei kann es sich beispielsweise um einen Flash-Speicher mit einer NAND- oder einer NOR- Architektur handeln.

Bei der in Fig. 9 dargestellten Ausführungsform ist in dem nichtflüchtigen Speicher NVM der Programmcode gespeichert, der von der CPU (Fig. 4, 5 und 8) ausgeführt werden kann. Insbesondere kann in dem nichtflüchtigen Speicher NVM der Programmcode des Chipkarten-Betriebssystems, OS, der Java Card Laufzeitumgebung, JCRE, (bestehend aus Java Card Virtual Machine, JCVM und Java Card Application Programming Interfaces, JCAPI), und Applikationen hinterlegt sein. Dabei liegen die Applikationen vorzugsweise in Form von Java Card^{™} Applets vor.

Fig. 9 zeigt ein Ausführungsbeispiel eines Systems aus Endgerät 1 und SE. Das Endgerät 1 ist beispielsweise ein M2M-Gerät in einer IoT Umgebung. Das SE ist betriebsbereit in das Endgerät 1 fest eingebracht. Der Chipsatz 2 des Endgeräts 1 umfasst neben dem SE noch weitere Chips A, B, C, siehe Erläuterungen zu Fig. 3 bis 5. Beispielhaft ist Chip A das Modem. Der gesamte Datenaustausch zwischen SE und dem Endgerät 1 findet bevorzugt unter Verwendung der sogenannten APDUs (application protocol data units) gemäß der Norm ISO/IEC 7816-4 statt. Eine APDU stellt eine Dateneinheit der Anwendungsschicht dar, also eine Art Container, mit dem Kommandos und/ oder Daten an die eUICC 1 übertragen werden. Eine Kommunikationseinheit des Chipsatzes 2 ist eingerichtet, um Daten des Endgeräts 2 oder des SE über ein Kommunikationsnetz 4 auszutauschen.

Fig. 10 zeigt ein Beispiel für ein Profil 1 (und andeutungsweise für ein Profil 2 und ein Profil 3), wie es im Schritt 103 vom Server an den Datenerzeuger bereitgestellt werden kann. Das Profil 1 kann einen OTA-Schlüssel, ein Dateisystem, eine Authentisierung, einen Sicherheitsunterbereich, Anwendungen, eine IMSI, eine ICCID und ggf. Aktualisierungen umfassen.

Im Rahmen der Erfindung können alle beschriebenen und/oder gezeichneten und/oder beanspruchten Elemente beliebig miteinander kombiniert werden.

### BEZUGSZEICHENLISTE

1 Endgerät
2 Chipsatz (Mehrzahl verschiedener integrierter Schaltkreise)
3 BLOB-individueller öffentlicher Teil eines ECC-Schlüsselpaars
4 SE-individueller BLOB-Verschlüsselungsschlüssel
5 BLOB-Daten = Betriebssystem-Code + Subskriptionsdatensatz/-sätze + ggf. Testprofil
6 Signatur über den BLOB
7 Testprofil
8 Betriebssystem
9 Profil/Subskriptionsdatensatz
10 Blob
A - D unterschiedliche Chips eines Chipsatzes
APP Applikationsprozessor
BB Basisband-Prozessor
Benutzer-ID Benutzer-Identifikator
BLOB verschlüsseltes Speicherabbild mit HSM-Schlüssel
BUS Datenbus
CPU Steuereinheit
eSE embedded Secure Element, eSE
EUM Datenerzeuger
Geräte-ID Endgeräte-Identifikator
HSM Hardware Security Module
I/O Datenschnittstelle (BUS)
iSE integriertes Secure Element
iSEn n-tes Secure Element
NFC Nahfeldkommunikations-Modul
NVM Nichtflüchtiger Speicher (wiederbeschreibbar)
OS Betriebssystem
OTP Einmalpasswort-Speicher
PROFIL Subskriptionsdatensatz
RAM Flüchtiger Speicher
ROM nichtflüchtiger Speicher (permanent)
SE Secure Element
SE-UID Secure-Element-Identifikator
SP Secure Processor
101-107 Verfahrensschritte gemäß der Erfindung
201-209 Verfahrensschritte gemäß einer Weiterbildung der Erfindung

## Patentansprüche

1. Ein Verfahren (100) zum Personalisieren eines Secure Elements (SE) mit den folgenden Verfahrensschritten:
- Empfangen (101), in einem Datenerzeuger, einer Anfrage für ein Bündel von Speicherabbildern für eine Vielzahl von Secure Elementen (SE), wobei jedes angefragte Speicherabbild des empfangenen Bündels ein Secure Element (SE) der Vielzahl von Secure Elementen (SE) betrifft und wobei jeweils ein Secure Element (SE) der Vielzahl von Secure Elementen (SE) in einem entsprechenden Endgerät (1) einer Vielzahl von Endgeräten (1) fest verbaut wird oder ist;
- Anfragen (102) eines Subskriptionsdatensatzes bei einem Subskriptionsverwaltungsserver,
- Erhalten (103), im Datenerzeuger, von zumindest einem Subskriptionsdatensatz (Profil) für zumindest ein zu personalisierendes Secure Element (SE) der Vielzahl von Secure Elementen (SE), wobei der Subskriptionsdatensatz (Profil) von dem Subskriptionsverwaltungsserver erhalten wird;
- Bereitstellen (104), durch den Datenerzeuger, eines Betriebssystems (OS) oder eines Teils des Betriebssystems (OS) für das zu personalisierende Secure Element (SE);
- Erzeugen (105), durch den Datenerzeuger, eines Speicherabbilds (BLOB) für jedes der Vielzahl von Secure Elementen (SE) gemäß der empfangenen Anfrage, wobei zumindest das Speicherabbild des zu personalisierenden Secure Elements (SE) das bereitgestellte Betriebssystem (OS) oder den Teil des Betriebssystems (OS) und zusätzlich den erhaltenen zumindest einen Subskriptionsdatensatz (Profil) umfasst;
- Bündeln der erzeugten Speicherabbilder (BLOB) und Bereitstellen (107) der gebündelten Speicherabbilder als Speicherabbilder-Bündel vom Datenerzeuger zur Fertigstellung der Endgeräte (1) unter Einbringen zumindest des Speicherabbilds (BLOB) des zu personalisierenden Secure Elements (SE) in das Secure Element (SE) zum Personalisieren (108) des Secure Elements (SE);
- wobei das erzeugte Speicherabbild (BLOB) des zu personalisierenden Secure Elements (SE) verschlüsselt wird und zusätzlich ein Testprofil (7) umfasst, wobei das Testprofil kein Erstprofil ist und nach dem Personalisieren ausgeführt wird, um eine Kommunikationsverbindung mit einem Mobilfunknetzwerk zu simulieren, wobei erst bei erfolgreich simulierter Kommunikationsverbindung die SIM-Funktionalität freigeschaltet wird, und wobei das Testprofil zusammen mit dem Betriebssystem und dem Subskriptionsdatensatz in demselben verschlüsselten Speicherabbild (BLOB) bereitgestellt wird.

2. Das Verfahren (100) nach Anspruch 1, wobei die Anfrage für das Bündel von Speicherabbildern für jedes angefragte Speicherabbild umfasst:
- eine Endgeräte-Information betreffend ein Endgerät (1), in das ein Secure Element (SE) betreffend eines der angefragten Speicherabbilder fest verbaut wird und/oder
- eine Secure-Element-Information betreffend eines der Vielzahl von Secure Elementen (SE) betreffend eines der angefragten Speicherabbilder und/oder
- eine Benutzerinformation betreffend einen Benutzer eines Endgeräts (1), in das ein Secure Element (SE) betreffend eines der angefragten Speicherabbilder fest verbaut wird und/oder
- ein öffentlicher Schlüsselteil eines kryptografischen Schlüsselpaares des Secure Elements (SE) betreffend eines der angefragten Speicherabbilder.

3. Das Verfahren (100) nach Anspruch 2, wobei der erhaltene Subskriptionsdatensatz (Profil) auf der Endgeräte-Information, der Secure-Element-Information und/oder der Benutzerinformation und/oder dem öffentlichen Schlüsselteil basiert. U

4. Das Verfahren (100) nach Anspruch 2 oder 3, wobei die Endgeräte-Information und/oder die Secure-Element-Information eine Chipsatz-Information für einen Chipsatz (2) ist, der das Secure Element (SE) umfasst.

5. Das Verfahren (100) nach einem der vorhergehenden Ansprüche, wobei im Erhalten-Schritt (103) der Datenerzeuger zumindest einen Subskriptionsdatensatz (Profil) für zumindest zwei oder mehr Secure Elemente (SE) der Vielzahl von Secure Elementen (SE) vom Subskriptionsverwaltungsserver erhält.

6. Das Verfahren (100) nach einem der vorhergehenden Ansprüche, wobei im Bereitstellen-Schritt (104) für zumindest zwei oder mehr Secure Elemente (SE) der Vielzahl von Secure Elementen (SE) ein Betriebssystem (OS) oder ein Teil des Betriebssystems (OS) bereitgestellt wird.

7. Das Verfahren (100) nach einem der vorhergehenden Ansprüche, wobei die Anfrage für das Bündel von Speicherabbildern von einem Endgerätehersteller oder einem Chipsatzhersteller versendet wird.

8. Das Verfahren (100) nach einem der vorhergehenden Ansprüche, wobei das Speicherabbilder-Bündel der erzeugten Speicherabbilder in einer Datenbank bereitgestellt (106) wird und von einem Endgerätehersteller zum Fertigstellen der Vielzahl von Endgeräten (1) abgerufen wird, wobei das Abrufen aus der Datenbank kryptografisch abgesichert ist.

9. Das Verfahren (100) nach einem der vorhergehenden Ansprüche, wobei der Datenerzeuger räumlich entfernt vom Subskriptionsverwaltungsserver und/oder dem Endgerätehersteller ist.

10. Das Verfahren (100) nach Anspruch 1, wobei das Testprofil (7) nach dem Personalisieren (108) des Secure Elements (SE) im sodann fertiggestellten Endgerät (1) ausgeführt wird, um eine Kommunikationsverbindung mit einem Mobilfunknetzwerk zu simulieren.

11. Das Verfahren (100) nach Anspruch 10, wobei erst bei erfolgreich simulierter Kommunikationsverbindung eine SIM-Funktionalität des Secure Elements (SE) freigeschaltet wird.

12. Das Verfahren (100) nach einem der vorhergehenden Ansprüche, wobei der Datenerzeuger ein vSIM-Hersteller oder ein SE-Hersteller ist und wobei das Secure Element (SE) ein integriertes Secure Element (iSE) oder ein embedded Secure Element (eSE) ist.

13. Das Verfahren (100) nach einem der vorhergehenden Ansprüche, wobei vor dem Erhalten der Anfrage für ein Bündel von Speicherabbildern für jedes Secure Element (SE) ein asymmetrisches kryptografisches Schlüsselpaar erzeugt wird, wobei der private Schlüsselteil des asymmetrischen kryptografischen Schlüsselpaars permanent im Secure Element (SE) verbleibt und der öffentliche Schlüsselteil des asymmetrischen kryptografischen Schlüsselpaars in ein Hardware Security Modul (HSM) des Datenerzeugers übermittelt wird.

14. Das Verfahren (100) nach einem der vorhergehenden Ansprüche, wobei der Endgerätehersteller nach Erhalt des Speicherabbilder-Bündels, das Speicherabbild (BLOB) für das zu personalisierende Secure Element (SE) aus dem Speicherabbilder-Bündel entnimmt und in das zu personalisierende Secure Element (SE) ablegt.

## Claims

1. A method (100) for personalizing a secure element (SE), comprising the following steps:
- receiving (101), in a data generator, a request for a " " bundle of memory images for a plurality of secure elements (SE), wherein each requested memory image of the received bundle relates to a secure element (SE) of the plurality of secure elements (SE), and wherein a respective secure element (SE) of the plurality of secure elements (SE) is or will be permanently installed in a corresponding terminal device (1) of a plurality of terminal devices (1);
- Requesting (102) a subscription record from a subscription management server,
- Receiving (103), in the data generator, at least one subscription data record (profile) for at least one Secure Element (SE) to be personalized from the plurality of Secure Elements (SE), wherein the subscription data record (profile) is received from the subscription management server;
- Providing (104), by the data generator, an operating system (OS) or a part of the operating system (OS) for the secure element (SE) to be personalized;
- Generate (105), by the data generator, of a memory image (BLOB) for each of the plurality of secure elements (SE) in accordance with the received request, wherein at least the memory image of the secure element (SE) to be personalized comprises the provided operating system (OS) or the portion of the operating system (OS) and, in addition, the received at least one subscription data record (profile);
- bundling the generated memory images (BLOBs) and providing (107) the bundled memory images as a memory image bundle from the data generator for the finalization of the end devices (1), including the insertion of at least the memory image (BLOB) of the secure element (SE) to be personalized into the secure element (SE) for personalization (108) of the secure element (SE);
- wherein the generated memory image (BLOB) of the secure element (SE) to be personalized is encrypted and additionally comprises a test profile (7), wherein the test profile is not an initial profile and is executed after personalization to simulate a communication connection with a cellular network, wherein the SIM functionality is enabled only after the communication connection has been successfully simulated, and wherein the test profile is provided together with the operating system and the subscription data set in the same encrypted memory image (BLOB).

2. The method (100) according to claim 1, wherein the request for the bundle of memory images comprises, for each requested memory image:
- terminal information relating to a terminal (1) in which a secure element (SE) relating to one of the requested memory images is permanently installed, and/or
- Secure Element information relating to one of the plurality of Secure Elements (SE) associated with one of the requested memory images; and/or
- user information relating to a user of a terminal device (1) in which a secure element (SE) relating to one of the requested memory images is permanently installed, and/or
- a public key component of a cryptographic key pair of the Secure Element (SE) associated with one of the requested memory images.

3. The method (100) according to claim 2, wherein the received subscription data record (profile) is based on the terminal information, the secure element information, and/or the user information, and/or the public key portion.

4. The method (100) according to claim 2 or 3, wherein the terminal information and/or the Secure Element information is chipset information for a chipset (2) that comprises the Secure Element (SE).

5. The method (100) according to any one of the preceding claims, wherein, in the obtaining step (103), the data generator obtains at least one subscription record (profile) for at least two or more secure elements (SE) from the plurality of secure elements (SE) from the subscription management server.

6. The method (100) according to any one of the preceding claims, wherein, in the provision step (104), an operating system (OS) or a portion of the operating system (OS) is provided for at least two or more secure elements (SE) of the plurality of secure elements (SE).

7. The method (100) according to any of the preceding claims, wherein the request for the bundle of memory images is sent by a terminal manufacturer or a chipset manufacturer.

8. The method (100) according to any one of the preceding claims, wherein the memory image bundle of the generated memory images is provided (106) in a database and is retrieved by a device manufacturer to complete the plurality of devices (1), wherein the retrieval from the database is cryptographically secured.

9. The method (100) according to one of the preceding claims, wherein the data generator is geographically remote from the subscription management server and/or the device manufacturer.

10. The method (100) according to claim 1, wherein the test profile (7) is executed after the secure element (SE) has been personalized (108) in the then-completed end device (1) to simulate a communication connection with a mobile network.

11. The method (100) according to claim 10, wherein SIM functionality of the secure element (SE) is enabled only after the communication connection has been successfully simulated.

12. The method (100) according to one of the preceding claims, wherein the data generator is a vSIM manufacturer or an SE manufacturer, and wherein the secure element (SE) is an integrated secure element (iSE) or an embedded secure element (eSE).

13. The method (100) according to any one of the preceding claims, wherein, prior to receiving the request for a bundle of memory images for each Secure Element (SE), an asymmetric cryptographic key pair is generated, wherein the private key portion of the asymmetric cryptographic key pair remains permanently in the Secure Element (SE), and the public key portion of the asymmetric cryptographic key pair is transmitted to a hardware security module (HSM) of the data generator.

14. The method (100) according to any of the preceding claims, wherein, upon receipt of the memory image bundle, the end-device manufacturer extracts the memory image (BLOB) for the Secure Element (SE) to be personalized from the memory image bundle and stores it in the Secure Element (SE) to be personalized.

## Revendications

1. Procédé (100) de personnalisation d'un élément sécurisé (SE), comprenant les étapes suivantes :
- réception (101), dans un générateur de données, d'une requête concernant un ensemble d'images mémoire pour une pluralité d'éléments sécurisés (SE), chaque image mémoire demandée du lot reçu concernant un élément sécurisé (SE) de la pluralité d'éléments sécurisés (SE) et un élément sécurisé (SE) de la pluralité d'éléments sécurisés (SE) étant respectivement intégré de manière fixe dans un terminal correspondant (1) parmi une pluralité de terminaux (1) ;
- demande (102) d'un enregistrement d'abonnement auprès d'un serveur de gestion des abonnements,
- réception (103), dans le générateur de données, d'au moins un enregistrement d'abonnement (profil) pour au moins un élément sécurisé (SE) à personnaliser parmi la pluralité d'éléments sécurisés (SE), l'enregistrement d'abonnement (profil) étant obtenu auprès du serveur de gestion des abonnements ;
- fournir (104), par le générateur de données, un système d'exploitation (OS) ou une partie du système d'exploitation (OS) pour l'élément sécurisé (SE) à personnaliser ;
- Génération (105), par le générateur de données, d'une image mémoire (BLOB) pour chacun des nombreux éléments sécurisés (SE) conformément à la requête reçue, l'image mémoire de l'élément sécurisé (SE) à personnaliser comprenant au moins le système d'exploitation (OS) fourni ou la partie du système d'exploitation (OS) ainsi que, en outre, au moins un ensemble de données d'abonnement (profil) reçu ;
- regroupement des images mémoire (BLOB) générées et mise à disposition (107) des images mémoire regroupées sous forme de lot d'images mémoire par le générateur de données en vue de la finalisation des terminaux (1), en intégrant au moins l'image mémoire (BLOB) de l'élément sécurisé (SE) à personnaliser dans l'élément sécurisé (SE) pour personnaliser (108) de l'élément sécurisé (SE) ;
- l'image mémoire générée (BLOB) de l'élément sécurisé (SE) à personnaliser étant chiffrée et comprenant en outre un profil de test (7), ce profil de test n'étant pas un profil initial et étant exécuté après la personnalisation afin de simuler une liaison de communication avec un réseau de téléphonie mobile, la fonctionnalité SIM n'étant activée qu'une fois la liaison de communication simulée avec succès, et dans lequel le profil de test est fourni avec le système d'exploitation et l'ensemble de données d'abonnement dans la même image mémoire chiffrée (BLOB).

2. Procédé (100) selon la revendication 1, dans lequel la requête concernant l'ensemble d'images mémoire comprend, pour chaque image mémoire demandée :
- des informations sur le terminal concernant un terminal (1) dans lequel un élément sécurisé (SE) relatif à l'une des images mémoire demandées est intégré de manière permanente et/ou
- des informations relatives à un élément sécurisé (SE) parmi la pluralité d'éléments sécurisés (SE) concernant l'une des images mémoire demandées et/ou
- des informations d'utilisateur concernant un utilisateur d'un terminal (1) dans lequel un élément sécurisé (SE) relatif à l'une des images mémoire demandées est intégré de manière permanente, et/ou
- une partie de la clé publique d'une paire de clés cryptographiques de l'élément sécurisé (SE) relative à l'une des images mémoire demandées.

3. Le procédé (100) selon la revendication 2, dans lequel l'enregistrement de données d'abonnement (profil) obtenu est basé sur les informations relatives au terminal, les informations relatives à l'élément sécurisé et/ou les informations relatives à l'utilisateur et/ou la partie de clé publique.

4. Procédé (100) selon la revendication 2 ou 3, dans lequel les informations relatives au terminal et/ou les informations relatives à l'élément sécurisé constituent des informations de chipset pour un chipset (2) comprenant l'élément sécurisé (SE).

5. Procédé (100) selon l'une des revendications précédentes, dans lequel, lors de l'étape de réception (103), le générateur de données reçoit du serveur de gestion des abonnements au moins un ensemble de données d'abonnement (profil) pour au moins deux éléments sécurisés (SE) ou plus parmi la pluralité d'éléments sécurisés (SE).

6. Procédé (100) selon l'une des revendications précédentes, dans lequel, lors de l'étape de mise à disposition (104), un système d'exploitation (OS) ou une partie du système d'exploitation (OS) est mis à disposition pour au moins deux éléments sécurisés (SE) ou plus parmi la pluralité d'éléments sécurisés (SE).

7. Procédé (100) selon l'une des revendications précédentes, dans lequel la demande concernant l'ensemble d'images mémoire est envoyée par un fabricant de terminaux ou un fabricant de chipsets.

8. Procédé (100) selon l'une des revendications précédentes, dans lequel le lot d'images mémoire des images mémoire générées est mis à disposition (106) dans une base de données et est récupéré par un fabricant de terminaux pour finaliser la pluralité de terminaux (1), la récupération à partir de la base de données étant sécurisée par des moyens cryptographiques.

9. Procédé (100) selon l'une des revendications précédentes, dans lequel le générateur de données est géographiquement éloigné du serveur de gestion des abonnements et/ou du fabricant du terminal.

10. Procédé (100) selon la revendication 1, dans lequel le profil de test (7) est exécuté après la personnalisation (108) de l'élément sécurisé (SE) dans le terminal (1) alors finalisé, afin de simuler une liaison de communication avec un réseau de téléphonie mobile.

11. Procédé (100) selon la revendication 10, dans lequel une fonctionnalité SIM de l'élément sécurisé (SE) n'est activée qu'une fois la liaison de communication simulée avec succès.

12. Procédé (100) selon l'une des revendications précédentes, dans lequel le générateur de données est un fabricant de vSIM ou un fabricant de SE, et dans lequel l'élément sécurisé (SE) est un élément sécurisé intégré (iSE) ou un élément sécurisé embarqué (eSE).

13. Procédé (100) selon l'une des revendications précédentes, dans lequel, avant la réception de la demande d'un ensemble d'images mémoire pour chaque élément sécurisé (SE), une paire de clés cryptographiques asymétriques est générée, la partie clé privée de la paire de clés cryptographiques asymétriques restant en permanence dans l'élément sécurisé (SE) et la partie clé publique de la paire de clés cryptographiques asymétriques est transmise à un module de sécurité matériel (HSM) du générateur de données.

14. Procédé (100) selon l'une des revendications précédentes, dans lequel, après réception du lot d'images mémoire, le fabricant de terminaux extrait l'image mémoire (BLOB) correspondant à l'élément sécurisé (SE) à personnaliser de ce lot d'images mémoire et l'enregistre dans l'élément sécurisé (SE) à personnaliser.
